(19) Europäisches Patentamt
European Patent Office
Office européen des brevets

(11) **EP 2 534 467 B1**

(12) **FASCICULE DE BREVET EUROPEEN**

(45) Date de publication et mention
de la délivrance du brevet:
**12.08.2015 Bulletin 2015/33**

(51) Int Cl.:
***G01N 15/00*** *(2006.01)*     ***G01N 15/10*** *(2006.01)*
***G01N 15/14*** *(2006.01)*

(21) Numéro de dépôt: **11708057.2**

(22) Date de dépôt: **02.02.2011**

(86) Numéro de dépôt international:
**PCT/FR2011/050202**

(87) Numéro de publication internationale:
**WO 2011/098707 (18.08.2011 Gazette 2011/33)**

(54) **DISPOSITIF ET PROCEDE DE MESURES MULTIPARAMETRIQUES DE MICROPARTICULES DANS UN FLUIDE**

VORRICHTUNG UND VERFAHREN FÜR MULTIPARAMETERMESSUNGEN VON MIKROPARTIKELN IN EINER FLÜSSIGKEIT

DEVICE AND METHOD FOR MULTIPARAMETER MEASUREMENTS OF MICROPARTICLES IN A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2010 FR 1050948**

(43) Date de publication de la demande:
**19.12.2012 Bulletin 2012/51**

(73) Titulaire: **Horiba ABX SAS**
**34000 Montpellier (FR)**

(72) Inventeurs:
• **MERCHEZ, Benoît**
**F-34980 Combaillaux (FR)**
• **RAIMBAULT, Sébastien**
**F-34380 Argelliers (FR)**

• **NERIN, Philippe**
**F-34080 Montpellier (FR)**
• **URANKAR, Alexandra**
**F-34980 Saint Clement De Riviere (FR)**

(74) Mandataire: **Domange, Maxime et al**
**Cabinet Beau de Lomenie**
**232, avenue du Prado**
**13295 Marseille Cedex 08 (FR)**

(56) Documents cités:
**WO-A1-2006/053960**    **US-A- 5 194 909**
**US-A- 5 247 340**    **US-A- 5 506 673**
**US-A- 6 074 879**    **US-A1- 2005 074 894**
**US-A1- 2005 151 967**    **US-A1- 2005 176 152**

**Description**

Arrière-plan de l'invention

La présente invention se rapporte au domaine général des dispositifs et procédés de mesures en flux pour la caractérisation de microparticules notamment de cellules biologiques. La présente invention se rapporte plus spécifiquement à la mesure de la réfringence de microparticules biologiques associée à d'autres paramètres utiles dans les applications biomédicales.

Dans ce contexte, la plupart des automates d'analyse cytologique, tels que les automates d'hématologie, sont destinés à mesurer des caractéristiques cellulaires qui permettent au biologiste d'identifier l'origine de certaines affections. Par exemple, le diagnostic de certaines anémies, de certains cancers ou le suivi de certains traitements médicamenteux, s'effectue par l'observation des caractéristiques physiques de chaque cellule. Ces caractéristiques cellulaires peuvent être mesurées, par exemple, par des cytomètres de flux équipés de plusieurs détecteurs ou de capteurs d'image. Un cytomètre de flux comportant un dispositif de prise d'image est divulgué dans le brevet US 5 247 340.

L'objectif de cette invention est de développer un dispositif et un procédé pour permettre une meilleure différenciation et donc un meilleur comptage de chacune des populations particulaires contenues dans un échantillon biologique, en particulier dans le sang. L'invention permet également de mesurer très précisément le contenu intracellulaire en hémoglobine de chaque population érythrocytaire. Par extension, le dispositif et le procédé selon l'invention peuvent permettre une meilleure analyse des populations leucocytaires de l'échantillon.

Concernant la lignée érythrocytaire, les paramètres de routine délivrés par les automates les plus courants sont : le nombre de globules rouges par unité de volume (#GR), le volume globulaire moyen (VGM dont l'unité physique est traditionnellement le $\mu m^3$), l'indice de distribution des rouges (IDR en %), l'hématocrite (HT exprimée en %), la concentration moyenne en hémoglobine dans l'échantillon primaire (HB), la concentration corpusculaire moyenne en hémoglobine (CCMH ou MCHC exprimée en g/dL), la teneur corpusculaire moyenne en hémoglobine (TCMH ou MCH exprimée en pg).

La plupart des analyseurs d'hématologie mesurent les paramètres : # GR, HB et l'hématocrite, tous les autres paramètres étant obtenus par calcul.

On remarque néanmoins que les globules rouges les plus immatures et qui contiennent des résidus d'acides ribonucléiques (ARN), cellules appelées réticulocytes, sont mesurés sur certains types d'analyseurs. Un marqueur colorant ou fluorescent est alors utilisé pour révéler la présence de l'ARN intra cytoplasmique. La fraction des globules rouges qui expriment un signal spécifique, fluorescence ou diffraction, au marquage ARN permet de déterminer le nombre par unité de volume de réticulocytes (#RET).

En complément à ces paramètres, le diagnostic de certaines anémies ou le suivi de leur traitement nécessite la connaissance de la concentration en hémoglobine de chaque globule rouge (CHC : Concentration en Hémoglobine Corpusculaire) et/ou de chaque réticulocyte (CHCr :Concentration en Hémoglobine des réticulocytes). Contrairement aux paramètres CCMH et TCMH qui sont des valeurs moyennes calculées sur toute la population des globules rouges, CHC et CHCr sont des valeurs de concentration en hémoglobine de chaque corpuscule qui permettent de construire des histogrammes qui représentent la distribution de l'hémoglobine sur les populations des globules rouges et de la frange immature (les réticulocytes). Par exemple, deux patients ayant des concentrations moyennes identiques en hémoglobine peuvent présenter des distributions statistiques très différentes sur les globules rouges et les réticulocytes. Cela est bien connu en cytologie. Ainsi, lorsqu'un frottis est examiné à l'aide d'un microscope, la couleur d'un globule rouge est fortement corrélée à son contenu en hémoglobine : plus la concentration en hémoglobine est importante, plus l'atténuation de la lumière est importante. Cette observation est une conséquence de la loi de Beer-Lambert qui renseigne sur le fait que la densité optique est proportionnelle à la concentration du soluté. La connaissance de la distribution statistique de l'hémoglobine au sein des différentes cellules renseigne sur l'état de santé d'un patient. L'écart à la normalité est un symptôme interprété par le médecin biologiste. Par exemple, les globules rouges ayant une faible teneur en hémoglobine sont qualifiés d'hypochromiques tandis que les globules rouges ayant une teneur en hémoglobine élevée sont qualifiés d'hyperchromiques. Les globules rouges pour lesquels la distribution en hémoglobine est fortement variable d'une cellule à l'autre est un syndrome de polychromatophilie. Les cellules pour lesquelles la teneur est anormale présentent souvent des propriétés rhéologiques anormales à l'origine d'autres symptômes physiologiques notamment en cas de thalassémies ou de drépanocytoses. L'interprétation hématologique de ces paramètres sur des sujets sains ou pathologiques a été exposée dans l'article paru dans Blood intitulé « Simultaneous measurement of reticulocytes and red blood cell indices in healthy subjects and patients with microcytic and macrocytic anemia », Onofrio et al. 1995, vol. 85, p. 818 à 823.

Le contenu en hémoglobine des réticulocytes est donc actuellement reconnu comme un paramètre très utile pour le diagnostic des anémies centrales ou encore pour le suivi de la réponse d'un patient à des traitements. D'ailleurs, de nombreuses publications dans des journaux à comité de lecture et de nombreuses demandes de brevets ont été publiées au cours de ces dernières années, que ce soit à propos de l'interprétation clinique de la distribution de l'hémoglobine sur l'ensemble des hématies, que des procédés à mettre en oeuvre pour obtenir cette information.

Par exemple, les anémies ferriprives touchent diverses franges de la population notamment les personnes dialysées pour lesquelles un bilan de la charge en fer est réalisé régulièrement. Les personnes touchées par des hémorragies ou saignements, les personnes traitées souffrant d'hémodialyse, ou encore en cas de malnutrition, sont sujets à des anémies ferriprives. De plus les sujets traités à l'érythropoïétine (EPO) peuvent développer un syndrome d'anémie ferriprive : alors que les réserves tissulaires en fer sont suffisantes voire excessives, le mécanisme de synthèse de l'hémoglobine est limité par la dérégulation du métabolisme de la fixation du fer. Le dosage de la ferritine et du coefficient de saturation de la transferrine sont souvent utilisés dans le diagnostic de ces désordres biologiques, mais il est reconnu que la concentration sérique de ces protéines spécifiques est influencée par d'autres facteurs en cas de syndrome inflammatoire ou d'infection.

L'article intitulé « Reticulocyte hemoglobin content (CHr) : early indicator of iron deficiency and response to therapy » (Brugnara et al., Blood 1994, vol. 83, p. 3100-3101) nous enseigne que la réponse à une supplémentation en fer par voie orale peut être suivie par la mesure du compte absolu en réticulocytes et de la concentration corpusculaire en hémoglobine. Ainsi, les personnes qui répondent positivement à ce traitement voient simultanément le nombre de réticulocytes augmenter ainsi que leur charge en hémoglobine dès le premier jour. Les indices des globules rouges matures ne sont impactés que très longtemps après le traitement, souvent après plusieurs semaines. La mesure de #RET et de l'histogramme des CHCr est donc très importante pour connaître à l'avance l'efficacité d'un traitement.

Ainsi, la connaissance de la distribution statistique de la concentration en hémoglobine sur la lignée des globules rouges ou encore une fraction de celle-ci présente un intérêt important en complément à d'autres paramètres usuels disponibles sur la plupart des analyseurs d'hématologie.

Concernant les thrombocytes, il est très intéressant pour le médecin ou le biologiste de pouvoir comptabiliser et mettre en évidence l'activation des plaquettes qui peut être le reflet d'un phénomène d'agrégation à l'origine de thromboses. Cette différenciation entre plaquettes activées et non activées est relativement difficile à mettre en évidence sur un automate d'hématologie.

Le fait également de pouvoir faire la différence entre des plaquettes de grande taille (macroplaquettes) et de microcytes (qui sont des globules rouges de très petites tailles), est important pour éviter des erreurs dans certains diagnostics. Malheureusement au sein des analyseurs d'hématologie, il n'existe pas actuellement de solutions, autres qu'à base de lasers, simple et efficace pour éviter cette indétermination entre macro-plaquettes et microcytes.

Concernant la lignée leucocytaire, il est bien évident que la différenciation précise des différents types cellulaires est un atout considérable pour un diagnostic de qualité par le médecin biologiste. Par exemple, l'article « The cytoplasmic refractive index of lymphocytes, its significance and its changes during active immunization » (K. W. KEOHANE et W. K. METCALF, January 1, 1959 Experimental Physiology, 44, 343-350) montre que la mesure de l'indice de réfraction des lymphocytes permet de déterminer leur niveau d'activation suite à une opération de vaccination.

Pour la mesure du contenu en hémoglobine de la lignée des globules rouges, diverses méthodes basées sur des principes de cytométrie en flux ont été proposées sur la base de mesures optiques, principalement des mesures de diffraction ou de réflectivité cellulaire, ces mesures étant combinées ou non à des mesures électriques opérant en régime continu ou pulsé au travers d'un micro orifice de mesure.

Afin d'assurer une bonne uniformité d'illumination de la fenêtre de mesure, des montages optiques de Köhler comme ceux décrits dans la demande US 2005/0151967 et dans le brevet WO 2006/053960 peuvent être utilisés.

La première méthode de mesure de l'hémoglobine corpusculaire est attribuée à D. H. Tycko. Dans le brevet US 4,735,504, l'auteur expose une méthode optique basée sur la diffraction de la lumière mesurée dans deux régions de l'espace identifiées par deux paramètres correspondant à des angles très spécifiques obtenus par calcul. Il faut noter que le globule rouge est préalablement traité chimiquement pour lui donner une forme quasi-sphérique. Dans les limites de cette approximation, il est possible de considérer le globule rouge comme une sphère homogène de rayon R et d'indice de réfraction IDX. La théorie de Mie appliquée à ce modèle simplifié du globule rouge permet de déterminer l'intensité diffusée dans chaque région de l'espace et de déterminer une géométrie optimale où les courbes d'isoconcentration et d'isovolumes ne se coupent pas mais définissent au contraire un réseau de courbes univoques. Ce réseau de courbes permet de résoudre le problème inverse consistant à déterminer le volume de la sphère et son indice de réfraction à partir des deux mesures de lumière diffractée dans les deux sous-pupilles du système de détection.

Le même auteur reconnaît la complexité de cette méthode optique dans le brevet US 5,194,909, colonne 4, ligne 39 à 57. En lieu et place des deux mesures de lumière diffractée, D. H. Tycko propose de mesurer le volume de la cellule par la technique classique de Wallace Coulter qui consiste à mesurer la variation d'impédance occasionnée par le passage d'une cellule biologique au travers d'un micro orifice. Cette mesure électrique est complétée par une mesure de lumière diffractée dans une seule pupille du système optique. Là encore, Tycko détermine une pupille annulaire déterminée par deux angles $(\theta_L; \theta_H)$ qui permettent de définir un réseau de courbes donnant une solution unique du contenu en hémoglobine du globule rouge à partir de la seule information de lumière diffractée dans la pupille du système optique.

D'une manière générale, les méthodes de mesure comme celles explosées précédemment par exemple doivent être calibrées à l'aide de particules présentant des propriétés semblables à celles des particules analysées comme celles décrites par exemple dans le brevet US 6,074,879 et plus particulièrement dans la demande de brevet US 2005/0074894 telle que publiée pour le cas de globules rouges nucléés.

Partant du fait que la calibration des méthodes proposées par Tycko présentaient de grandes difficultés de mise en oeuvre, puisque ne pouvant pas être calibrées avec des billes de latex conventionnelles, l'équipe Russe de Novossibirsk a développé un concept original permettant de mesurer l'indicatrice de diffusion de microparticules. Ce système est dénommé « Scanning Flow Cytometer (SFC) ». L'angle entre la source de lumière, la microparticule et le détecteur est fonction du déplacement de la microparticule dans la veine fluide. Ainsi, le déplacement de la microparticule permet de scruter un secteur angulaire qui permet d'enregistrer l'indicatrice de la lumière diffractée dans une plage d'angles relativement importante. Divers collaborateurs de cette équipe russe ont appliqués le Scanning flow cytometer (SFC) à la mesure du volume et du contenu en hémoglobine de globules rouges.

Dans l'article intitulé « Calibration-free method to détermine the size and hemoglobin concentration of individual red blood cells from light scattering » (Sem'yanov et al. Applied Optics, vol. 39, No. 31, nov. 2000), les auteurs démontrent que la figure de diffraction produite par des globules rouges présente une série de minima et de maxima. Les caractéristiques de position et d'amplitude de ces extrema sont combinées pour aboutir à un algorithme de calcul permettant de déduire le volume et la concentration en hémoglobine de globules rouges, sans opération de calibration préalable.

Dans les brevets US 5,817,519 et US 6,025,201, l'utilisation d'un laser est rendue nécessaire par la mesure de diffraction aux petits angles. La mesure est basée sur la théorie de Mie et le principe utilisé se rapproche donc de celui utilisé dans les dispositifs décrits par Tycko. Ainsi, dans ces documents, la combinaison d'une mesure de diffraction en combinaison avec l'acquisition d'un autre signal qui peut être de nature optique ou de nature électrique permet de calculer la réfringence des plaquettes uniquement. Les autres cellules ne peuvent pas être discriminées par le dispositif électro-optique décrit.

Dans le brevet de la société Beckman coulter US 2005/0134833, D.L. Kramer reconnait que les méthodes basées sur la mesure de la diffraction de la lumière vers l'avant sont entachées d'erreur car elles reposent sur la réfringence cellulaire qui dépend elle-même de l'indice de réfraction intra-cytoplasmique. Il déclare que cet indice de réfraction peut varier de manière importante en fonction d'autres solutés que l'hémoglobine, notamment la présence de sels. Il préconise un dispositif basé sur une mesure de réflectivité pour s'affranchir des imprécisions des autres systèmes. Le fonctionnement de son dispositif est appliqué à la mesure d'hémoglobine de globules rouges. La mesure de réflectivité est combinée à une mesure de volume cellulaire obtenue par la technique de la variation d'impédance d'un micro canal de mesure traversé par un courant continu selon le principe Coulter. Sans que l'efficacité de son dispositif ne soit démontrée, l'auteur indique que le paramètre de réflectivité se corrèle avec le contenu en hémoglobine.

Une approche non optique a été proposée dans le brevet WO97/ 26528 déposé par cette même société. Dans ce brevet, le contenu en hémoglobine corpusculaire est déterminé par deux mesures électriques : l'une continue, l'autre opérant en régime pulsé. En régime continu, seul le volume hors tout de la cellule est mesuré, alors qu'en régime pulsé, le champ interagit avec le contenu intra cytoplasmique dont la conductivité semble être contrôlée par la concentration en hémoglobine.

On note en outre que les inventions ou publications citées jusqu'ici ne s'intéressent qu'à la mesure du contenu en hémoglobine des globules rouges sans aucune mention des réticulocytes.

En cytométrie de flux, la détection d'un réticulocyte n'est possible qu'après marquage spécifique de l'acide ribonucléique comme cela est par exemple décrit dans le brevet FR 2 759 166 déposé par la Demanderesse. Une étude comparant divers procédés de détection des réticulocytes (« Reticulocyte Enumeration : Past & Present», Riley et al., Laboratory Medecine, vol. 32, Numéro 10, octobre 2001) reconnaît notamment les méthodes fluorescentes sont les plus performantes. Plus spécifiquement le composé thiazole orange est reconnu comme l'un des meilleurs marqueurs des acides nucléiques (ADN et ARN). La suprématie de cette molécule tient au fait qu'elle absorbe fortement la lumière incidente et que le rendement de fluorescence est très élevé après hybridation avec les acides nucléiques. Cette méthode est proposée systématiquement dans les analyseurs d'HORIBA Medical pour le comptage automatique des réticulocytes (« Automated reticulocyte counting and immature reticulocyte fraction measurement », Lacombe et al. American Journal of Clinical Pathology, vol. 112, No. 5, Novembre 1999).

Le brevet US 5,530,695 de la société Miles Inc., par exemple, décrit une méthode de coloration des acides nucléiques par l'oxazine 750 ou par le New Methylene Blue. L'oxazine 750 entraîne la précipitation des acides nucléiques ce qui permet leur détection par une mesure d'extinction optique. Les auteurs reconnaissent que leur invention repose sur l'adaptation d'une mesure d'extinction optique au traditionnel dispositif de Tycko décrit précédemment. La mesure d'absorption est utilisée exclusivement pour la discrimination des cellules immatures, en particulier les réticulocytes, alors que les signaux de diffraction sont utilisés pour calculer les indices globulaires que sont le volume et le contenu en hémoglobine corpusculaire. Dans ce brevet, il est reconnu que la mesure d'absorption nécessaire à la résolution des cellules immatures est interdépendante de la mesure de diffraction. Pour réduire cette interférence, ainsi que présenté dans l'exemple 3, colonnes 15 et 16, les auteurs proposent une méthode de correction cellule à cellule. Malheureusement ces calculs sont complexes et peu propices à la précision car ils doivent découpler deux phénomènes optiques de faibles amplitudes : d'une part l'effet de la réfringence, d'autre part l'effet de d'absorption, ces deux effets étant mélangés dans le signal mesuré d'extinction optique. Une première limite de cette méthode de correction provient du fait que le globule est supposé être une sphère homogène parfaite. La théorie de Mie est utilisée pour calculer la proportion de signal à retrancher au signal d'extinction optique. De ce calcul est déterminée une nouvelle valeur de l'absorption imputable à la seule contribution du colorant et utilisée pour mesurer la quantité en acides nucléiques et donc déterminer le degré de maturité du globule rouge.

La figure 18 du document US 5,530,695 donne une comparaison des résultats de comptage des réticulocytes entre le dit procédé et la méthode de comptage manuel. Bien que le coefficient de corrélation ne soit pas indiqué, on remarque que les mesures sont fortement dispersées et que le compte des réticulocytes n'est pas précis en dessous de 2%. Or, il est connu que la durée de vie moyenne d'un globule rouge est de 120 jours: on peut donc estimer que le taux de renouvellement des globules rouges est en moyenne égal à 0,8 % par jour ce qui explique, d'un point de vue purement biologique la nécessité de disposer d'une méthode sensible pouvant mesurer bien en deçà de 2%.

Le brevet US, 5,360,739, toujours de la société Miles Inc., décrit une méthode de détermination du contenu en hémoglobine corpusculaire basée sur le principe de Tycko, c'est-à-dire que la diffraction de la lumière est mesurée selon deux angles de diffraction dénommés respectivement « red scatter low » et « red scatter high », alors que la mesure des réticulocytes est basée non pas sur la mesure d'absorption optique telle que dans le brevet US 5,530,695 mais sur le principe de la fluorescence. Les auteurs envisagent l'utilisation de deux composés photo-excitables, l'un dans le rouge (l'oxazine 750) l'autre dans le bleu (l'acridine orange et leurs dérivés). Dans ce dernier cas, les auteurs proposent le couplage de deux lasers en amont de la cuve, de sorte que ces faisceaux de lumière soient conjugués au point de mesure. Le montage optique proposé utilise des axes d'illumination et de détection coaxiaux qui introduisent un niveau de complexité important puisque dans le cas du composé photo-excitable dans le bleu, le montage conduit à utiliser 4 canaux de mesure. Dans cette méthode, le tout optique est privilégié pour la détermination des paramètres d'intérêt (volume et concentration corpusculaire en hémoglobine) de chaque globule rouge et de chaque réticulocyte contenu dans un échantillon de sang.

Le brevet US 6,630,990 de la société Abbott, aborde le problème de la mesure de concentration de l'hémoglobine corpusculaire d'une manière sensiblement équivalente au procédé précédent. Ce brevet présente un dispositif optique permettant la résolution de plusieurs lignées cellulaires, notamment les lignées des globules blancs et des globules rouges. Ce système est composé d'une seule source de lumière et d'un seul récepteur présentant trois zones de mesure définissant une géométrie singulière pour le calcul, à partir de la théorie de Mie, de l'hémoglobine corpusculaire et du volume cellulaire. Les principales caractéristiques reposent sur l'utilisation de 3 angles de diffractions pour calculer les paramètres de volume V et d'hémoglobine corpusculaire HC ce qui induit une complexité importante tant sur le plan technologique, puisqu'un détecteur spécifique est nécessaire, que sur la méthode de traitement des données qui opère dans un espace à 3 voire 4 dimensions si la mesure de fluorescence est ajoutée comme paramètre de mesure de la maturité des globules rouges. La complexité de la méthode de calibration du dispositif, est aussi un point important qui n'est pas abordé dans le document.

Le paramètre RET-y a été introduit par la société SYMEX sur l'analyseur XE2100. Diverses études expérimentales ont été conduites par plusieurs équipes afin d'évaluer l'intérêt clinique de ce paramètre RET-y. Par exemple, l'article « New Red Cell Parameters on the Sysmex XE-2100 as potential markers of functional Iron Deficiency », (Briggs et al., 2001 , Sysmex Journal International Vol. 11, No. 2) démontre que le paramètre RET-y est corrélé au contenu en hémoglobine des réticulocytes. Ce paramètre, qui est la valeur moyenne de la réponse du FSC limitée à la seule population des réticulocytes, est calculé à partir de la représentation bi-paramétrique FSC x FLUO d'un échantillon de cellules analysées par cytométrie de flux où, classiquement, le paramètre FSC correspond à la diffraction aux petits angles et le paramètre FLUO correspond à la fluorescence d'une polyméthine photo-excitable dans le rouge utilisée pour le marquage et la quantification des acides nucléiques ADN/ARN. Plus récemment, dans l'article « Potential Utility of Ret-Y in the Diagnosis of Iron-Restricted Erythropoiesis » (Franck et al., Clinical Chemistry 50: 1240-1242, 2004), ont été présentés des résultats similaires par C. Briggs *et al.*. Les auteurs reconnaissent que les paramètres MCH et CHr sont corrélés au paramètre RET-y. Une méthode de régression non-linaire permettant de calibrer l'analyseur XE2100 de la société SYSMEX à l'analyseur de référence Advia 120 de marque Bayer est aussi proposée. Ces résultats ont été décrits et consignés dans le brevet EP 1 967 840 A2 déposé par la société SYSMEX en mars 2007. Malheureusement, les non-linéarités de la réponse du FSC sont susceptibles d'imprécisions importantes notamment pour des valeurs élevées du paramètre CHr. En particulier pour des valeurs proche de 40 pg, on remarque que la méthode n'est pas sensible puisque RET-y ne varie pratiquement plus autour de cette valeur. De plus, ce brevet ne fait référence qu'aux seules populations des réticulocytes, la représentation bi-paramétrique FSC x FLUO n'étant pas adaptée à la mesure des autres particules du sang circulant, notamment les leucocytes.

La demande US 2005/0176152 décrit une méthode permettant de différencier les globules rouges nucléés en effectuant une mesure de l'extinction optique, de la diffraction aux petits angles et/ou de l'impédance.

Le brevet US 5,506,673 décrit un analyseur de particules mesurant les variations d'impédance et la lumière diffractée afin de déterminer, entre autres, le diamètre des particules. Le calcul de l'indice de réfraction permet d'établir un modèle et de déduire le diamètre des particules de petite dimension sur la base de la mesure de la lumière diffractée seule.

La mesure de la diffraction aux petits angles telle que décrite dans les brevets de l'art antérieur, par exemple le dispositif de Tycko et les montages dérivés, est réalisée au travers d'une pupille annulaire dont le diamètre apparent est de 5 à 15 degrés. Pour obtenir une mesure de diffraction aux petits angles avec un bon rapport signal sur bruit, ces montages utilisent un laser. Dans ces conditions de fonctionnement, l'ouverture numérique du faisceau d'illumination est sensiblement nulle. En effet, l'utilisation d'un laser est, d'un point de vue pratique, l'unique solution permettant, à ouverture numérique sensiblement nulle, de produire des rayonnements de puissance importante (plusieurs milliwatts) nécessaires à une mesure efficace de la diffraction aux petits angles.

Les dispositifs basés sur les principes de mesure décrits dans l'art antérieur sont par conséquent des dispositifs coûteux du fait de l'inclusion d'un laser.

Par ailleurs, ils nécessitent l'utilisation d'un « stopper » pour arrêter le faisceau laser de manière efficace. Comme la précision d'alignement du « stopper » doit être élevée pour éviter la saturation du détecteur, le réglage et la fabrication des dispositifs fonctionnant selon ce principe sont particulièrement délicats.

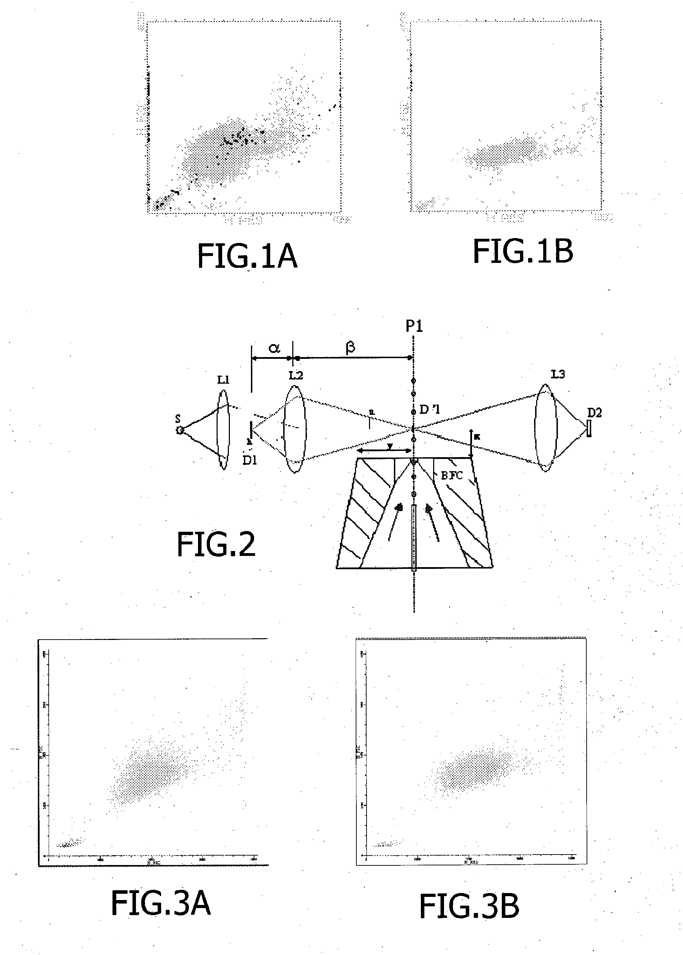

En outre, les dispositifs connus sont très sensibles à la qualité de la sphérisation des corpuscules par le réactif. Dans les dispositifs opérant en régime de diffraction aux petits angles, le phénomène de diffraction correspond sensiblement à celui d'une onde plane, qui est, par définition, de divergence nulle. La nature de cette interaction avec la microparticule est très sensible aux effets de forme de celle-ci. Aussi, lorsque la microparticule n'est pas une sphère parfaite, le résultat de la mesure est entaché d'erreurs importantes. Ce fait a été découvert expérimentalement comme indiqué aux figures 1A et 1B. Il s'agit ici d'une représentation bi-paramétrique des paramètres de volume (RES) et de diffraction laser (FSC) sur des globules rouges mesurés dans l'intervalle angulaire 1-30 degrés. La figure 1A est obtenue avec un diluant de la société ABX (Brevet FR 2 759 166 - Fluored®) possédant un indice sphérisant faible alors que la figure 1B est obtenue sur le même système mais avec un réactif possédant un indice sphérisant élevé (diluant Balyer utilisé sur l'Advia 2120). On remarque que la figure 1A est entachée d'erreurs importantes, puisque l'ensemble des populations sont très dispersées. Sur la figure 1B, au contraire, les populations particulaires se situent dans une région du plan définissant un ensemble plus compact avec une corrélation FSC x RES importante révélée par la forme elliptique de cet ensemble.

Il est donc évident qu'indépendamment du système de mesure, la nature du réactif influe beaucoup le résultat dans les dispositifs de l'art antérieur.

Objet et résumé de l'invention

La présente invention a donc pour but principal de pallier de tels inconvénients en proposant un procédé de classification et de mesure en flux de la réfringence d'au moins deux populations cellulaires particulières présentes dans un fluide, utilisant une source lumineuse de faible cohérence temporelle, de longueur de cohérence Lc < 100 $\mu$m, utilisée en régime d'extinction à une longueur d'onde centrale choisie en fonction de l'intervalle de volume et de l'intervalle d'indice de réfraction attendus pour les particules considérées, comprenant les étapes de :

- former, avec la source lumineuse, un faisceau d'illumination convergeant d'ouverture angulaire comprise entre 1° et 60°, préférentiellement de 10° à 60°, choisie en fonction de l'intervalle de volume et de l'intervalle d'indice de réfraction attendus pour les particules considérées à la longueur d'onde centrale choisie et présentant une uniformité d'éclairage meilleure que 10% dans un volume de mesure parallélépipédique axbxc où axb est la section rectangulaire du faisceau dont le facteur d'aspect a/b est inférieur à 4 et c est la profondeur de champ définie comme l'intervalle géométrique autour du point de mesure pour lequel la puissance ne varie pas plus de 10%, sa valeur étant située autour de 500 $\mu$m +/- 250 $\mu$m ;
- faire circuler le fluide de particules au travers d'un orifice de mesure ;
- mesurer des variations d'impédance (RES) au passage des particules au niveau de l'orifice de mesure ;
- faire circuler la solution biologique dans la fenêtre de mesure illuminée par le faisceau placée à la sortie de l'orifice de mesure ;
- mesurer, dans l'axe du faisceau, des extinctions (EXT) au passage des particules dans la fenêtre de mesure à l'aide d'un dispositif ou d'un détecteur dont le faisceau de réception, d'ouverture angulaire comprise entre 1 ° et 60°, est choisi en fonction de l'intervalle de volume et de l'intervalle d'indice de réfraction attendus pour les populations particulaires considérées ;
- fusionner les données RES et EXT pour en former des événements ;
- évaluer un indice de réfraction relatif IDX pour chacun des événements ; selon une expression du type :

$$IDX = \frac{EXT - B.\ln(RES + T) - D}{A.\ln(RES + T) + C}$$

avec A, B, C, D et T coefficients dépendants des conditions expérimentales et du cycle de mesure ;
- effectuer la classification de tous les événements grâce à au moins un paramètre choisi parmi RES, EXT ou IDX.

L'invention pourra être étendue par l'ajout d'une mesure de fluorescence afin de différencier les différents stades de maturations cellulaires.

Conformément à la figure 2, l'invention propose donc une méthode utilisant des moyens électro-optiques simples permettant de mesurer les indices de réfraction (ou la réfringence) de plusieurs lignées cellulaires. Des réactifs adaptés sont choisis lors de la préparation des échantillons sur lesquels on effectue ensuite les mesures selon le procédé de l'invention.

L'originalité de l'invention consiste en l'utilisation simultanée d'une mesure de volume par méthode électrique et d'une mesure d'extinction optique pour déterminer une information de réfringence particulaire.

Signalons que la réfringence particulaire est une mesure relative à la réfringence du milieu liquide dans lequel cette particule baigne, et enfin que la mesure de la réfringence particulaire dépend de paramètres caractérisant le dispositif de mesure.

Ainsi, la réfringence de la particule ou son indice de réfraction, notée m peut s'exprimer par le rapport de deux grandeurs physiques:

$$m = Ne / N_L$$

où dans les conditions expérimentales données Ne est l'indice de réfraction de la particule et $N_L$ l'indice de réfraction du milieu liquide dans lequel la particule baigne, cet indice relatif est aussi noté IDX dans la suite de cet exposé.

Dans l'analyse cytologique, notamment dans le domaine de l'hématologie, cette information de réfringence permet par exemple une classification améliorée des populations cellulaires considérées ou encore peut renseigner sur le métabolisme cellulaire car elle fournit une information supplémentaire sur le contenu cellulaire ou les propriétés de la membrane.

Dans le procédé de l'invention, aucune mesure de diffraction comme pratiquée d'ordinaire, n'est effectuée pour l'évaluation de la réfringence. L'invention est basée sur l'utilisation d'une mesure d'extinction optique. Ainsi le signal optique est mesuré sur fond clair et non sur fond noir comme cela était le cas dans les dispositifs de l'art antérieur. Une conséquence immédiate est qu'il n'est alors pas nécessaire d'utiliser un laser qui reste un composant relativement coûteux et dont la mise en oeuvre demeure plus complexe en comparaison à une source non laser.

Le procédé selon l'invention utilise ainsi une source non laser qui peut être par exemple une lampe à semi-conducteur telle qu'une diode électroluminescente, une diode super-luminescente ou encore une lampe à incandescence.

Selon l'invention, le montage optique est plus simple que les dispositifs de l'art antérieur. En outre, sa mise en oeuvre est plus aisée puisque, notamment, la mesure opérant sur fond clair, il n'est pas nécessaire de stopper le faisceau d'illumination avant l'étape de détection photoélectrique.

L'utilisation selon l'invention d'un faisceau d'illumination convergent d'ouverture angulaire relativement importante, supérieure à 10 degrés permet d'offrir une moindre sensibilité à la forme du globule rouge.

On sait en effet que le faisceau convergent, non cohérent, peut se décomposer en un spectre d'ondes planes dont l'angle d'incidence par rapport au globule rouge varie.

L'ouverture angulaire du faisceau d'illumination est définie par la différence entre ces deux valeurs.

Selon une caractéristique préférentielle, cette ouverture varie de 10 à 60 degrés.

Ainsi, contrairement aux dispositifs de l'art antérieur, la particule est illuminée par un spectre continu d'ondes planes. Chaque onde produit alors une figure de diffraction, de telle sorte que le signal mesuré est la réponse intégrée de toutes les ondes planes avec la particule analysée.

Chacune des ondes planes voyant la particule sous un angle différent, les anisotropies de forme sont « moyennées ».

Ceci explique la supériorité du procédé selon l'invention par rapport aux dispositifs de l'art antérieur vis-à-vis des conditions de forme de la particule, notamment de sa sphérisation. Dans le cas des globules rouges en particulier, cette étape préalable est obtenue par un traitement chimique de la microparticule par exemple comme celui décrit par Y. R. Kim et L. Ornstein dans l'article « Isovolumetric Sphering of Erythrocytes for More Accurate and Precise Cell Volume Measurement by Flow Cytometry » (Cytometry, 1983, Vol 3, issue 6, p. 419-427).

Le montage optique selon l'invention est plus tolérant quant à la qualité de la sphérisation de particules biologiques telles que les globules rouges. Ainsi, les spécifications du réactif en terme de pouvoir sphérisant sont moindres. La sphérisation de la particule n'étant plus totalement déterminante dans la mise en oeuvre du procédé de mesure, l'invention permet de privilégier ou de créer d'autres fonctions chimiques telles que la perméabilisation de la membrane nécessaire à une coloration ou un marquage de structures spécifiques internes à la particule.

L'invention offre ainsi la possibilité de trier en classes des particules analysées par mesures d'impédance et d'extinction sur la base de la mesure de leur réfringence effective et de leurs volumes.

Cela permet de déterminer non seulement un nombre de classes déclinées en fonction de la réfringence mais aussi la fraction en pourcentage des particules supportée par chaque classe tel que la somme des fractions est égale à 100%.

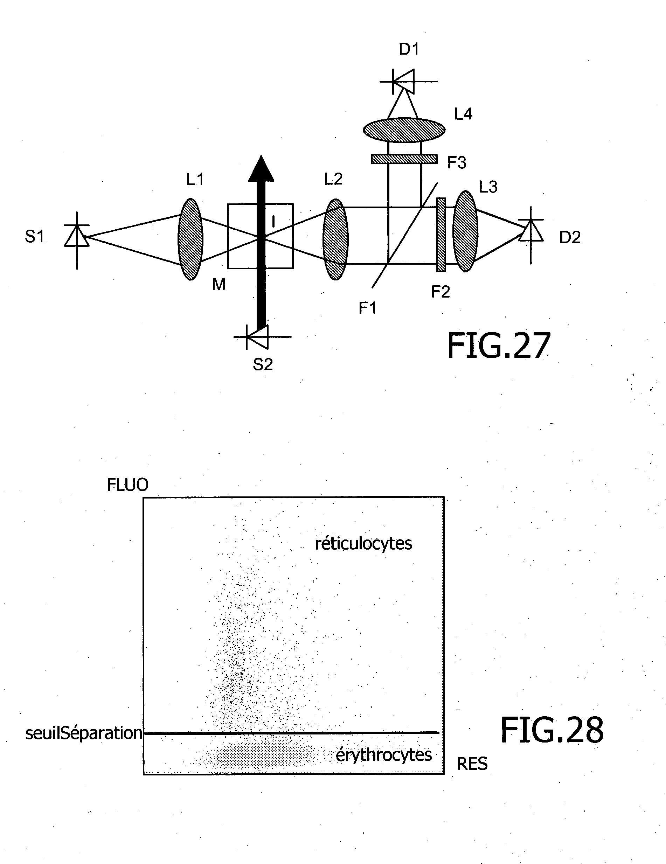

Dans un mode particulier de l'invention, selon la figure 27, par un simple ajout dans le canon de réception d'un miroir dichroïque F1 et d'un laser à 90° de l'axe de la source S1, le montage optique selon l'invention permet la mesure de fluorescence et donc la séparation des érythrocytes et des réticulocytes.

De la même façon, ce dispositif pourra permettre la mesure de fluorescence des globules blancs et donc leur séparation en fonction de la réponse en fluorescence.

Cette invention décrit notamment des solutions plus performantes et plus simples que celles publiées antérieurement.

Une application de la méthode concerne la mesure de la réfringence des globules rouges et des plaquettes. La connaissance du pouvoir réfringent d'un globule rouge permet de déterminer sa concentration en hémoglobine.

De façon plus générale, cette invention permet de déterminer le contenu en hémoglobine des érythrocytes et des réticulocytes, d'améliorer la classification des plaquettes par rapport aux autres cellules ou microparticules contenues dans un échantillon de sang total (notamment les globules rouges et le bruit de fond véhiculé par les divers fluides de dilutions de l'échantillon primaire) et de déterminer le niveau d'activation de ces plaquettes. Le procédé de l'invention peut ensuite être étendu à l'ensemble des cellules du sang circulant pour classifier et/ou qualifier les globules blancs (notamment les lymphocytes, monocytes, neutrophiles, éosinophiles et basophiles et autres cellules nucléées).

Selon une caractéristique avantageuse, l'indice de réfraction relatif est calculé selon une expression du type :

$$IDX = \frac{EXT - B.\ln(RES + T) - D}{A.\ln(RES + T) + C}$$

avec A, B, C, D et T coefficients dépendants du cycle de mesure.

Cette caractéristique permet de faire un calcul rapide et simple de l'indice de réfraction car il s'agit d'une expression modélisant l'indice de réfraction à partir de deux variables et d'une simple fonction logarithmique.

Avantageusement, les particules analysées sont des cellules d'un liquide biologique.

Aussi, selon une caractéristique préférentielle de l'invention, les longueurs d'onde utilisées pour la mesure de la réfringence particulaire sont situées dans le rouge et proche infrarouge au-delà de 0,6 $\mu$m.

En effet, la plage de mesure des volumes des microparticules se situe principalement entre 0 et 500 fL. C'est en particulier le cas pour les globules rouges et blancs, mais aussi pour les plaquettes.

Dans le cas des globules rouges, le choix de la plage des longueurs d'ondes assure l'unicité de la solution donnant une concentration en hémoglobine proportionnelle à la réfringence de chaque cellule déterminée elle-même par les mesures d'extinction optique et d'impédance.

Selon une caractéristique avantageuse de l'invention, l'étape de classification des événements réalise la séparation des érythrocytes et des plaquettes en utilisant une longueur d'onde comprise entre 600 nm et 800 nm et une ouverture numérique ON1 = ON2 comprise entre 0,2 et 0,6. Cette étape de séparation est réalisée en fonction de seuils qui définissent une zone d'appartenance des plaquettes ayant des valeurs par défaut, et qui peuvent être ajustés de manière automatique.

Cette caractéristique permet d'assurer un seuil de séparation adapté à l'échantillon observé. Selon l'invention, un signal d'extinction optique est mesuré et associé au signal résistif pour former un événement. Dans le cas où certaines particules ne sont pas vues en extinction, le procédé selon l'invention leur associe une extinction nulle. Cette sous-étape traite ces événements uniquement sur leurs valeurs d'impédance.

Avantageusement, l'étape de classification des événements comprend une sous-étape d'ajustement d'un seuil de séparation résistif entre les particules dont l'extinction n'a pu être mesurée, par détermination d'une vallée dans un histogramme réalisé à partir de toutes les particules rencontrées.

Selon une caractéristique particulière de l'invention, l'étape de classification des événements comprend une sous-étape d'ajustement d'un seuil de séparation résistif calculé à partir de paramètres statistiques, moyenne et écart type, des particules rencontrées sous un seuil de séparation défini par une droite affine fonction du volume et de l'extinction optique.

Ici encore la position du seuil de séparation est déterminée en fonction de l'échantillon. Cela constitue une démarche originale puisque la plupart des appareils actuels qui classent les globules rouges (RBC) et les plaquettes (PLT) le font sur la base de leurs volumes uniquement. Ce seuil permet donc de classer des plaquettes de la taille de microcytes, ce qui n'est pas possible avec les autres appareils pour lesquels on observe des interférences microcytaires. Il existe néanmoins des appareils qui utilisent une mesure de diffraction avec un laser mais le procédé mis en oeuvre est plus complexe que celui de cette invention.

Selon une autre caractéristique particulière de l'invention, l'étape de classification des événements comprend une sous-étape d'ajustement d'un seuil défini par une droite affine fonction du volume et de l'extinction (optique) après une rotation de l'ensemble du plan impédance (volume)/extinction permettant de placer une ligne de séparation verticale par détermination d'une vallée dans un histogramme réalisé à partir des abscisses des événements situées de part et d'autre de cette ligne de séparation.

Ici encore la position du seuil de séparation est déterminée en fonction de l'échantillon. Ici l'invention permet de différencier et donc de classer les globules rouges de petite taille par rapport aux plaquettes.

Selon une caractéristique avantageuse de l'invention, le procédé comprend une étape de calcul de la concentration en hémoglobine corpusculaire des particules classifiées dans la population érythrocytaire à l'aide d'une expression affine fonction de leur indice de réfraction IDX.

L'invention rend aisé le calcul de l'hémoglobine corpusculaire en utilisant le lien connu entre l'hémoglobine corpusculaire et l'indice de réfraction IDX.

Avantageusement, le procédé comprend une étape de sous-classification de populations érythrocytaires hypochromes, hyperchromes et normochromes et de populations érythrocytaires microcytaires, macrocytaires et normocytaires.

Dans la mesure où ces populations se distinguent par des différences de volumes et de réfringences, les mesures réalisées selon l'invention permettent de distinguer les populations microcytaires, macrocytaires, hypochromes ou hyperchromes qui sont définies et configurées préalablement à la classification en fonction du volume et du contenu en hémoglobine. La définition des différences entre ces populations sont souvent propres à chaque laboratoire. Néanmoins, un réglage par défaut peut être offert.

Selon une caractéristique avantageuse de l'invention, le procédé comprend une étape de calcul de la densité des particules classifiées dans la population plaquettaire à l'aide d'une expression affine fonction de l'indice de réfraction.

L'invention rend aisée l'obtention d'une évaluation de la densité des plaquettes grâce à la relation, connue par ailleurs, entre la densité et l'indice de réfraction.

Avantageusement, le procédé comprend en outre une étape de calcul de la masse sèche des plaquettes à partir de la densité de celles-ci et de leur volume connu par la mesure d'impédance.

Cette étape permet d'avoir accès à une grandeur signifiante et importante d'un point de vue biologique : la quantité de granulations de la plaquette. Ces granulations sont expulsées lorsque la plaquette s'active. Ainsi la densité plaquettaire est un révélateur de l'activation plaquettaire. En effet, un ensemble de plaquettes qui auraient été activées ne contiennent plus ou peu de granules. La mesure de l'indice de réfraction permet donc indirectement de mesurer leur degré d'activation. On insiste ici sur le fait que la mesure de l'indice de réfraction particulaire est relative au milieu dans lequel la particule baigne, mais aussi à la structure propre de la particule. Ainsi, l'interprétation des mesures de réfringence plaquettaire est aussi relative à leur complexité interne : une plaquette contenant des petites granules de réfringence élevée aura un indice de réfraction effectif plus élevé que la même plaquette ayant perdu ses granules au cours de son activation. En définitive, l'indice de réfraction calculé est celui d'une sphère homogène de volume égal à celui de la microparticule qui aurait produit une extinction optique identique à la microparticule analysée (plaquette, granulocyte, etc...).

Selon une caractéristique particulière, le procédé selon l'invention comprend une étape de sous-classification des plaquettes normales, des plaquettes activées, des microplaquettes et des macroplaquettes. Comme la notion de macroplaquette est relative au volume, comme pour les érythrocytes, la sous-classification peut être adaptée à chaque laboratoire.

Selon une caractéristique avantageuse, l'étape de classification des événements réalise la séparation des populations leucocytaires que sont notamment les lymphocytes, les monocytes, les granulocytes neutrophiles et les granulocytes éosinophiles, comprenant les étapes de :

a) séparer, par un premier seuillage 2D (RES x EXT ou VOLxIDX), le bruit de fond correspondant à la présence de débris, d'agrégats plaquettaires, d'érythroblastes, d'artefacts etc...
b) séparer, par seuillages 2D successifs, les différentes populations et leurs sous-populations atypiques ou immatures, incluant :

i) une sous-étape d'ajustement d'un seuil automatique entre les lymphocytes et granulocytes neutrophiles ;
ii) une sous-étape d'ajustement d'un seuil automatique entre les granulocytes neutrophiles et éosinophiles ;

iii) une sous-étape d'ajustement d'un seuil automatique entre les monocytes et granulocytes neutrophiles.

La transformation en indice de réfraction (IDX) permise par l'invention permet d'accéder à une information plus précise et plus orthogonale. En effet, cela permet de supprimer la composante qui, dans l'extinction optique, est corrélée au volume. Ainsi le seuillage 2D est avantageusement réalisé sur les grandeurs calculées de volume (VOL) et d'indice de réfraction (IDX) au lieu des paramètres d'impédance (RES) et d'extinction (EXT) proprement dit. Comme nous l'avons déjà vu, les propriétés statistiques de réfringence renseignent, en effet, plus précisément que l'extinction optique.

Ensuite, l'information est interprétée différemment pour chaque population et il est donc nécessaire de les classifier. Par exemple, on évaluera l'activation pour les lymphocytes, les granulations pour les granulocytes neutrophiles ou éosinophiles etc.

Avantageusement, le procédé comprend une étape de calcul d'un index d'activation pour les particules classées en lymphocytes à l'aide d'une expression affine fonction de l'indice de réfraction relatif calculé.

Les variations de l'indice de réfraction des lymphocytes sont décrits, par exemple, dans le document intitulé « The Cytoplasmic Refractive Index of Lymphocytes, its Significance and its Changes during Active Immunization » (Metcalf et al., Experimental Physiology, 44, 343-350, 1959) et dans le document « Changes in Blood Lymphocyte Cytoplasmic Refractive Index Following Skin Grafting in Rabbits » (Metcalf et al. Blood 1972 - 39 : 113-116).

L'invention permet l'évaluation de l'activation des lymphocytes grâce à la relation connue par ailleurs entre cette activation et l'indice de réfraction relatif calculé.

Selon une caractéristique avantageuse de l'invention, le procédé comprend une étape de calcul d'un indice d'activation pour les particules classées en lymphocytes par l'analyse de la distribution 2D des volumes et des extinctions optique et la détermination d'une ellipse statistique définie par la position de son centre, son grand axe, son petit axe et son angle entourant la population des lymphocytes.

La détermination d'une ellipse entourant les lymphocytes en utilisant les informations de volumes et d'indices de réfraction est encore rendue possible grâce à l'invention. Par ailleurs, dans le plan VOLxIDX, les propriétés statistiques 2D donnent accès à une information supplémentaire plus précise car non corrélée aux volumes.

Selon une caractéristique particulière, le procédé selon l'invention comprend une étape de calcul d'un indice de lobularité/granularité pour les particules classées en granulocytes neutrophiles à l'aide d'une expression affine fonction de l'indice de réfraction IDX.

L'invention rend aisée l'évaluation de la lobularité/granularité des granulocytes neutrophiles grâce à la relation entre cette lobularité/granularité et la réfringence relative calculée.

Selon une caractéristique avantageuse de l'invention, le procédé comprend une étape de calcul d'un indice de lobularité/granularité pour les particules classées en granulocytes neutrophiles par l'analyse de la distribution 2D en (résistif et extinction) ou (volume et indice de réfraction) et la détermination d'une ellipse statistique définie par la position de son centre, son grand axe, son petit axe et son angle entourant la population des granulocytes neutrophiles.

Cette étape permet de d'obtenir un indice moyen.

Selon une caractéristique particulière, l'étape de classification des événements réalise la séparation des granulocytes basophiles des autres populations leucocytaires comprenant les étapes de :

a) séparer, par seuillage 2D, le bruit de fond correspondant à la présence de débris érythrocytaires, d'agrégats plaquettaires, d'érythroblastes, d'artefacts etc. ;
b) séparer les granulocytes basophiles des autres leucocytes par seuillage 2D, incluant un ajustement d'un seuil automatique entre les granulocytes basophiles et les autres leucocytes.

Par seuillage 2D on entend un seuillage dans les plans RESxEXT, VOLxIDX ou n'importe quelle combinaison des grandeurs disponibles. En effet, la classification est possible dans n'importe quelle transformation qui préserve les relations d'ordre.

Avant le procédé de mesure et de classification, l'échantillon concerné est traité avec un réactif particulier (par exemple le réactif ABX Basolyse de la société Horiba Medical) qui préserve le rapport nucléo-cytoplasmique des basophiles. La méthode de positionnement automatique peut être réalisée par seuillage dans un plan RESxEXT, et consiste à analyser la distribution des autres leucocytes « rétrécis » autour de leur noyau. A partir du centre et de l'écart-type, on pose ensuite le seuil au dessus des leucocytes « rétrécis ». Les autres seuils sont fixes. Avec d'autres formes de fenêtrage et d'autres méthodes d'ajustement, le procédé selon l'invention permet de le faire dans le plan VOLxIDX.

Avantageusement, le procédé selon l'invention comprend une étape de détection d'événements présentant un indice de réfraction relatif hors normalité et correspondant de fait à des interférences dues à la présence de lipémie, de cristaux, de bulles etc.

Une telle étape permet de déceler la qualité de l'échantillon et donc des mesures qui ont été réalisées sur lui.

Selon une caractéristique avantageuse, le procédé comprend une étape de détection d'événements ayant un indice de réfraction relatif hors normalité et une distribution de volumes typique d'une émulsion. Les événements alors détectés constituent des interférences. L'invention permet ainsi de les détecter.

Selon une caractéristique avantageuse, le procédé comprenant une étape d'illumination du volume de mesure avec une lumière de longueur d'ondes choisie pour générer un phénomène de fluorescence et une étape de mesure de la fluorescence générée dans le volume de mesure, l'étape de classification des événements comprend une sous-étape d'ajustement d'un seuil de séparation en fluorescence calculé à partir des paramètres statistiques, maximum et écart type, des particules rencontrées.

En ajoutant une mesure de fluorescence aux mesures RESxEXT ou VOLxIDX, on assure une classification basée sur trois mesures donnant des informations distinctes sur les événements.

Selon une caractéristique particulière, l'étape de classification des événements identifiés comme érythrocytes réalise la séparation des érythrocytes et des réticulocytes en fonction d'un seuil placé sur la mesure en fluorescence qui correspond à la limite de maturité des érythrocytes, ayant une valeur par défaut et susceptible d'être ajusté de manière automatique.

Avantageusement, le procédé comprend une étape de calcul de la concentration en hémoglobine corpusculaire des particules classifiées dans la population réticulocytaire à l'aide d'une expression affine fonction de leur réfringence IDX.

L'invention rend aisé le calcul de l'hémoglobine corpusculaire en utilisant le lien connu entre l'hémoglobine corpusculaire et IDX, y compris pour les populations réticulocytaires.

Selon une caractéristique particulière, l'étape de classification des événements identifiés comme lymphocytes ou monocytes réalise la séparation des autres particules à fort contenu en acide nucléique (notamment ARN) en fonction d'un seuil sur la mesure de fluorescence qui correspond à la limite de maturité des leucocytes mononuclés, ayant une valeur par défaut et susceptible d'être ajusté de manière automatique.

Selon une caractéristique particulière, l'étape de classification des événements identifiés comme neutrophiles ou éosinophiles réalise la séparation des granulocytes et des immatures granuleux en fonction d'un seuil sur la mesure de fluorescence qui correspond à la limite de maturité des polynucléaires, ayant une valeur par défaut et susceptible d'être ajusté de manière automatique.

L'invention concerne donc un procédé de classification et de mesure en flux de la réfringence d'au moins deux populations de particules présentes dans un fluide. Ce procédé utilise une source lumineuse de faible cohérence temporelle, de longueur de cohérence Lc < 100 $\mu$m, utilisée en régime d'extinction à une longueur d'onde centrale choisie en fonction de l'intervalle de volume et de l'intervalle d'indice de réfraction attendus pour les particules considérées. Le procédé utilise un dispositif qui forme, avec la source lumineuse, un faisceau d'illumination convergeant d'ouverture angulaire choisie en fonction de l'intervalle de volume et de l'intervalle d'indice de réfraction attendus pour les particules considérées à la longueur d'onde centrale choisie. On fait ensuite circuler le fluide de particules au travers d'un orifice de mesure afin de mesurer des variations d'impédance, RES, au passage des particules. Le fluide de particules circule dans la fenêtre de mesure illuminée par le faisceau et on mesure, dans l'axe du faisceau, des extinctions, EXT, au passage des particules dans la fenêtre de mesure à l'aide d'un dispositif ou d'un détecteur dont le faisceau de réception convergent d'ouverture angulaire est choisi en fonction de l'intervalle de volume et de l'intervalle d'indice de réfraction attendus pour les particules considérées. Le procédé fusionne les données RES et EXT pour en former des événements qui permettent d'évaluer un indice de réfraction relatif pour chacun des événements et d'effectuer la classification de tous les événements grâce à au moins un paramètre choisi parmi RES, EXT ou IDX.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

Les figures 1A et 1B montrent les résultats obtenus dans un plan impédance/diffraction laser avec un dispositif de l'art antérieur, respectivement avec un réactif à pouvoir sphérisant faible et avec un réactif à pouvoir sphérisant fort ;
La figure 2 montre schématiquement un dispositif selon l'invention ;
Les figures 3A et 3B montrent les résultats obtenus dans un plan impédance/extinction avec un dispositif selon l'invention, respectivement avec un réactif à indice sphérisant faible et avec un réactif à indice sphérisant fort ;
La figure 4 montre l'indice de réfraction d'une solution aqueuse en fonction de la concentration en hémoglobine corpusculaire ;
La figure 5 montre la valeur de l'extinction apparente d'un globule rouge en fonction de son volume et de la concentration corpusculaire en hémoglobine (g/dL) pour $\lambda$= 650 nm et ON = 0,3 ;
La figure 6 montre la valeur de l'extinction apparente d'un globule rouge en fonction de son volume et de la concentration corpusculaire en hémoglobine (g/dL) pour $\lambda$= 405 nm et ON = 0,3 ;
La figure 7 montre la valeur de l'extinction apparente d'un globule rouge en fonction de son volume et de la concentration corpusculaire en hémoglobine (g/dL) pour λ= 800 nm et ON = 0,3 ;

La figure 8 compare les résultats de la mesure du paramètre de la Concentration Corpusculaire Moyenne en Hémoglobine (CCMH) de 28 échantillons de sang couvrant des valeurs basse et haute de ce paramètre pour deux analyseurs distincts ;

Les figures 9A à 9F montrent des mesures d'émulsion à l'aide du dispositif selon l'invention, respectivement d'hexane, d'heptane, d'octane, de nonane, de décane, de dodécane ;

La figure 10 montre la modélisation des paramètres de k et o en fonction de l'indice de réfraction ;

La figure 11 montre la représentation des différentes émulsions sur un plan d'abscisse RES et d'ordonnée l'indice de réfraction calculé ;

La figure 12 montre une matrice RBC/PLT dans le plan VOL x EXT;

La figure 13 montre un diagramme algorithmique de classification RBC et PLT ;

La figure 14 montre la classification RBC/PLT selon la matrice RESxEXT ;

La figure 15 montre les seuils de la matrice RBC/PLT utilisés lors du premier gating de la figure 14 ;

Les figures 16A et 16B illustrent la réalisation de la sous-étape d'ajustement de la séparation résistive ;

Les figures 17A à 17C illustrent la réalisation de la sous-étape d'ajustement de la séparation en extinction ;

La figure 18 montre le calcul de la concentration en hémoglobine à partir de l'indice de réfraction;

La figure 19 montre une sous-classification érythrocytaire selon leur volume et leur concentration en hémoglobine ;

La figure 20 montre une sous-classification des plaquettes selon leur volume et leur densité ;

Les figures 21A et 21B montrent une comparaison de classification sur un cas de microcytose ;

Les figures 22A et 22B montrent une comparaison de classification sur un cas avec macroplaquettes ;

La figure 23 montre la classification des leucocytes sur une matrice RESxEXT

La figure 24 montre une matrice RESxEXT pour une population de globules blancs analysant les distributions elliptiques 2D des particules;

Les figures 25A, 25B et 25C représentent les matrices VOLxIDX respectivement pour un sang normal et deux sangs pathologiques ;

La figure 26A montre une classification (RESxEXT) sur un canal destiné à la discrimination des basophiles, et les figures 26B et 26C montrent respectivement un sang normal et une interférence lipidique sur ce même canal dans le plan VOLxIDX ;

La figure 27 montre un dispositif de mesure de la réfringence particulaire couplé à une mesure de fluorescence ;

La figure 28 montre une matrice RESxFLUO montrant des érythrocytes en gris clair et des réticulocytes en noir ;

Les figures 29A et 29B montrent une matrice VOLxCHC des érythrocytes en gris clair et réticulocytes en noir et une matrice VOLxCHC des réticulocytes seuls.

La figure 30 montre la discrimination en fluorescence des cellules immatures pour les globules blancs sur une matrice EXTxFLUO

Description détaillée d'un mode de réalisation

Dans sa version la plus simple, le procédé repose sur une mesure bi-paramétrique d'une suspension cellulaire à partir d'un échantillon de sang total dilué dans un réactif spécifique. Ce réactif peut être un diluant isotonique tel que « ABX diluant » qui est commercialisé par la société Horiba Medical ou encore une lyse différentielle, par exemple le réactif « Leukodiff » commercialisé également par la société Horiba Médical permettant une lyse totale des globules rouges en préservant l'ensemble des cellules nucléées issues du sang circulant. La suspension cellulaire est caractérisée par le nombre de cellules par microlitre lui-même dépendant du système d'analyse. Par exemple, lorsque cette suspension cellulaire est analysée à l'aide d'un dispositif de cytométrie en flux utilisant le principe de l'hydro-focalisation, la dilution du sang total par un diluant isotonique est de l'ordre de 1 : 1000. Lorsque le réactif est une lyse différentielle, la dilution est de l'ordre de 1 : 100. Ces niveaux de dilution de l'échantillon de sang total permettent donc d'élaborer des suspensions cellulaires comprenant entre 10 et 10 000 cellules par microlitre sur des sangs normaux ou pathologiques. Les deux caractéristiques cellulaires mesurées 1) le volume cellulaire V par méthode électrique et 2) le signal d'extinction optique sont alors obtenues à partir du dispositif décrit schématiquement à la figure 2.

Le dispositif représenté sur la figure 2 comprend une source d'éclairage S, un condenseur L1, un diaphragme D1, une lentille de projection L2, une lentille de collection L3 pour collecter une image du réticule D'1, un détecteur photoélectrique D2 et une buse de focalisation BFC.

Les figures 3A et 3B ont été obtenues à partir du dispositif représenté sur la figure 2 lui-même opérant en régime d'extinction optique en lieu et place du régime de diffraction laser des dispositifs de l'art antérieur.

La figure 3A est obtenue avec le dispositif selon l'invention avec le réactif « Fluored » commercialisé par la société Horiba ABX (brevet FR 2 759 166). La figure 3B est obtenue avec le dispositif selon l'invention avec un réactif à fort pouvoir sphérisant de la société Bayer. On remarque ici que les figures sont comparables tant en termes de position des groupes d'événements que de forme de ces groupes.

En comparant ces figures aux figures 1A et 1B, on voit que le dispositif selon l'invention offre une meilleure tolérance par rapport à la forme des particules mesurées.

Dans le mode de réalisation présenté en figure 2, un capillaire de diamètre 125 $\mu$m dirige la suspension cellulaire dans une buse de focalisation BFC constituée d'un petit trou de diamètre 50 $\mu$m. Un fluide secondaire, représenté par les flèches, assure le centrage de la suspension cellulaire jusqu'à la traversée de l'orifice de mesure. Cet orifice est utilisé pour la mise en oeuvre de la mesure du volume par méthode électrique. Cet orifice est traversé par un courant constant. Lorsqu'une particule traverse l'orifice, l'impédance du canal est modifiée et produit une variation de tension aux bornes du trou de comptage. Cette tension est proportionnelle au volume de la particule. Ce procédé de mesure est connu et l'ensemble des dispositions électroniques pour sa mise en oeuvre n'est pas décrit dans ce brevet.

Ensuite, les particules sont acheminées, dans une fenêtre optique d'analyse obtenue en projetant un réticule d'intensité lumineuse aussi uniforme que possible. L'extinction optique est mesurée sur chaque particule. A noter que le faisceau d'illumination est convergent et caractérisé par son ouverture numérique ON = sin u selon l'invention où u est le demi angle d'ouverture au niveau du diaphragme D1.

Au niveau de la cuve de mesure, l'ouverture numérique du faisceau illuminateur est ON1= n*sin u.

L'uniformité d'éclairage est traditionnellement obtenue par un montage de type Köhler. Dans son principe, l'éclairage de Köhler consiste à imager la source de lumière S dans la pupille de la lentille L2. Ceci permet d'avoir d'une part une image unique de la source S située dans la pupille de la lentille L2, d'autre part d'uniformiser la répartition de la lumière dans l'image du réticule D'1.

Le système d'illumination peut aussi être basé sur l'utilisation d'une fibre optique conformée comme indiqué dans le brevet WO 2006/053960 de la Demanderesse.

Le dimensionnement d'un banc optique est basé sur la taille de la fenêtre optique ainsi que sur l'ouverture du faisceau dans la cellule de comptage. En effet, on peut définir I = hu, invariant de Lagrange, dans le plan P1, avec h la demi-hauteur de la fenêtre de mesure et u le demi-angle d'ouverture du faisceau. La valeur de cet invariant se conserve en tout point du système optique. En notant d une dimension caractéristique du diaphragme D1 et $\theta$ le demi angle d'ouverture au niveau du diaphragme D1, on a ainsi la relation I=hu=d$\theta$.

Ensuite, le flux lumineux noté $\phi$ intercepté par le diaphragme et collecté par la lentille L2 est égal au produit de l'étendue géométrique du faisceau notée G par la luminance L de la source S soit $\phi$ =LG. Puisque, dans un système optique sans perte, la luminance L se conserve, ce flux est fixé par l'étendue géométrique G=$\pi$ S sin$^2\theta$ où S est la surface du diaphragme et $\theta$ le demi angle d'ouverture.

Sans perte de généralité, on peut supposer que le diaphragme est carré de coté d. Le flux a alors pour expression :

$$\phi = LG = L \pi d^2 \sin^2 \theta \# L \pi d^2\theta^2 \quad \text{soit} \quad \phi \# \pi L \ I^2$$

On démontre ainsi que le flux est proportionnel :

- à la luminance L de la source, ce paramètre étant une caractéristique de la source définie comme étant le flux émis par unité de surface et unité d'angle solide (w/m$^2$/sr), et ;
- au carré de l'invariant de Lagrange I, ce paramètre étant parfaitement déterminé par les données géométriques du faisceau à l'intérieur de la cellule de comptage.

Il est important de noter qu'une fois I fixé du coté de la chambre de mesure, on ne peut jouer que sur la luminance de la source pour augmenter la puissance dans le système optique.

Pratiquement, le diaphragme est de forme rectangulaire et ses dimensions sont fixées par deux considérations. La plus grande dimension est fixée par la taille du fluide de gainage, ce diamètre étant sensiblement celui de l'orifice servant à la mesure volumétrique, d'environ 60 $\mu$m de diamètre. Elle est donc fixée autour de 100 $\mu$m.

La plus petite dimension détermine la résolution spatiale de la mesure, qui est la capacité à discriminer deux cellules très proches. Idéalement, cette dimension doit être la plus petite possible. La particule biologique traversant la fenêtre lumineuse à la vitesse v, la plus petite dimension de la fenêtre définit la durée d'exposition de la cellule au flux lumineux et donc la durée de l'impulsion électrique correspondant aux phénomènes physiques d'absorption et de diffraction. Pratiquement cette dimension est de l'ordre de 30 $\mu$m. On notera au passage que le facteur d'aspect de la fenêtre d'analyse est alors de l'ordre de 3.

Idéalement la mesure optique doit être la plus proche possible de la sortie de la buse de focalisation. A cet endroit, la particule a une position bien définie grâce à la cohérence de la veine fluidique. Il est donc assez naturel de focaliser la lumière dès la sortie de la buse de focalisation BFC. Si on appelle x la distance du point de focalisation par rapport à la sortie de la buse et y le rayon de la buse on obtient umax = x/y. Ainsi, plus la buse est de petite dimension, plus l'ouverture du faisceau peut être rendue importante et meilleur est le bilan photométrique.

Pour terminer cette description des caractéristiques optiques du dispositif selon l'invention, on remarque que fixer le paramètre G, qui est le grandissement de l'optique d'imagerie, entraîne la définition complète du système. Ce paramètre est fixé par des considérations d'encombrement.

En effet, un diaphragme de grande taille devra être positionné très loin de la lentille L2 alors qu'un diaphragme de petite dimension permettra de réaliser un montage plus compact puisque positionné plus près de la lentille L2. D'après l'invariant de Lagrange, on peut fixer de manière arbitraire le paramètre $\theta$. Ainsi, la taille du diaphragme D1 sera alors donnée par la relation d $=l/\theta$. Ceci étant fixé, le grandissement G = h/d est parfaitement déterminé.

Si l'on fixe une distance de travail notée $\beta$ sur le dispositif de la figure 2, la valeur correspondante $\alpha = \beta/G$ est une valeur déterminée. Remarquons que le paramètre $\beta$ est par ailleurs fixé par l'épaisseur de la paroi de la chambre de mesure, généralement en verre ou quartz, et l'épaisseur de fluide à traverser pour atteindre le flux particulaire représenté par des points sur l'axe de symétrie de la buse de focalisation BFC. Cette épaisseur optique est à prendre en considération pour fixer la distance de travail $\beta$ pour des questions d'encombrement mécanique. Finalement la focale de la lentille est aussi déterminée puisque f $= \alpha\beta/(\alpha+\beta)$. Ceci fixe au premier ordre, les données optiques et géométriques du montage de la figure 2.

La lumière diffractée, réfléchie ou absorbée par la particule induit une perturbation de la propagation de la lumière qui est détectée par un canon de réception constitué de la lentille L3 et par le détecteur D2. L'ensemble des signaux concourent à la mesure d'une extinction optique que nous appellerons extinction et notée EXT.

L'association de la lentille L3 et du détecteur D2 constitue la partie réception du montage. Dans la version la plus simple du montage, l'ouverture numérique du faisceau de l'optique de réception est égale à celle du faisceau d'éclairage.

On note l'ouverture numérique $ON_2 = n*sin(v)$ celle de l'optique de réception.

Dans la version la plus simple du montage, l'ouverture numérique du faisceau de l'optique de réception est égale à celle du faisceau d'éclairage. On a alors ON2 = ON1. Puisque l'illumination et la mesure de la microparticule s'effectuent dans le même fluide d'indice de réfraction n, on en déduit alors l'égalité des angles u = v.

De manière plus générale, le faisceau d'illumination n'a pas la même ouverture numérique que le faisceau d'observation de la microparticule. Ce fait est bien connu en microscopie optique où l'ouverture numérique définit le niveau de cohérence du faisceau illuminateur. De plus, les phénomènes de diffraction étant généralement fonctions de la cohérence des champs au niveau de l'objet illuminé, on s'attend à ce que la réponse du système optique dépende de l'ouverture numérique ON1 du système d'éclairage.

On sait en effet que le rayon de cohérence du champ lumineux dans le plan de passage de la microparticule est de l'ordre de rc $= \lambda/w$ où $\lambda$ est la longueur d'onde centrale et w est le diamètre apparent de la pupille d'éclairage. Cela est une conséquence du théorème de Van-Cittert Zernike. On peut par exemple consulter à ce sujet l'ouvrage de L. Mandel et E. Wolf « Optical Coherence and Quantum Optics » Cambridge University Press, 1995, p. 188.

Ainsi, selon l'invention, on peut être amené à modifier la cohérence spatiale de l'éclairage au niveau du point de mesure selon que l'extinction optique doit incorporer, de manière plus ou moins sensible, des informations morphologiques dont l'étendue des fréquences spatiales peut être plus ou moins importante. Par exemple, si une particule comporte des hautes fréquences spatiales, causées par une granularité de surface ou encore par des granulations internes à la particule, cas de certains leucocytes ou des plaquettes, on peut réduire la cohérence de l'éclairage en diminuant l'ouverture numérique du condenseur. Dans un tel cas, le faisceau illuminateur n'aurait pas une résolution spatiale suffisante pour révéler la présence de ces hautes fréquences spatiales et la mesure d'extinction optique serait sensible à ces granularités. Dans le cas contraire, l'interaction avec les granularités serait privilégiée et la mesure d'extinction optique serait d'autant plus marquée. Autrement dit, selon la théorie d'Abbe sur la formation des images, les fréquences spatiales de la particule analysée diffractent la lumière incidente.

De cette interaction résulte un spectre caractérisé par la dispersion angulaire de la lumière après interaction avec l'objet analysé. L'objectif servant à l'observation constitue un filtre spatial ne laissant passer qu'une partie des fréquences spatiales. La bande passante du filtre est définie par l'ouverture numérique ON2. Pour une description plus détaillée du spectre angulaire et des effets de cohérence on pourra se référer à l'ouvrage de Joseph W. Goodman intitulé « Introduction to Fourier Optics » (3° édition, Roberts & Compagny, Anglewood, Colorado, 2005, page 127, chapitre 6). Les travaux de S. Slansky de l'Institut d'Optique à Paris renseignent sur le rôle simultané de ON1 et ON2 dans le cas d'objets très simples tels qu'un point noir sur fond blanc, et montre que le contraste est optimal pour un choix correct du rapport ON1 / ON2.

On se référera aussi par exemple à l'article de S. Slansky « Influence de la cohérence de l'éclairage sur le contraste de l'image d'un point noir en présence d'un petit défaut de mise au point » (Journal of Modern Optics, vol. 2, no.3, octobre 1955).

Bien que l'invention ne fasse pas appel à la notion de contraste, ces notions sont à rapprocher des mesures de réfringence effective selon l'invention qui comportent des informations de structure dont les fréquences spatiales sont plus ou moins élevées. Enfin, la réfringence effective de la particule analysée correspond à la réfringence d'une sphère homogène de volume V identique à celui de la particule analysée, qui produirait le même phénomène d'extinction optique que la particule elle-même sur le même dispositif caractérisé par (ON1, ON2, Lc, λ, a, b) où ON1 est l'ouverture numérique de l'illumination, ON2 est l'ouverture numérique de la réception, Lc la longueur de cohérence de la source, λ la longueur d'onde centrale, a est la plus petite dimension de la fenêtre optique d'analyse qui est dans le sens de parcours de la particule, b est la plus grande dimension de la fenêtre optique d'analyse qui est perpendiculaire au sens de parcours de la particule. Une analyse numérique de la notion d'indice de réfraction effectif est par exemple proposé par A. Doicu et T. Wriedt dans leur article intitulé « Equivalent refractive index of a sphere with multiple spherical inclusions » (J. Opt. A : Pure Appl. Opt. 3 (2001) p. 204-209).

Enfin, notons que des pupilles d'un autre type sont utilisables, par exemple des pupilles annulaires. Ces solutions correspondent à des cas particuliers de l'invention qui ne seront pas décrits en détail. Finalement, on constate que le choix des paramètres du système, ON1, ON2, Lc, λ, a, b, dépend dans une large mesure des caractéristiques des particules à analyser.

Dans la suite le choix de ces paramètres est illustré pour la mesure des indices de réfraction des cellules du sang circulant. Les caractéristiques suivantes sont utilisées : ON1 = ON2 = 0,3, Lc = 15 μm, λ = 0,650 μm, a = 30 μm, b = 90 μm.

La particule qui va passer dans la fenêtre lumineuse absorbe et disperse la lumière du faisceau d'éclairage. Ces deux phénomènes contribuent à une diminution de la composante continue du signal photoélectrique que nous appelons extinction.

L'invention est liée à l'interprétation du mécanisme d'interaction onde particule. Cette interaction est le résultat subtil de l'interférence de l'onde incidente et de l'onde diffusée par la particule analysée tel que nous allons le décrire dans la suite.

L'approche théorique de Van de Hulst, théorie approchée du phénomène de diffraction encore appelée théorie de la diffraction anormale, sera utilisée.

En effet, l'étude de l'interaction d'une onde plane avec une sphère homogène est utile dans la mesure où, selon l'invention, la particule biologique interagit avec le faisceau de lumière au voisinage du plan focal. Dans ce plan, la structure de l'onde est sensiblement plane. On peut écrire que cette onde, représentée par le champ électrique complexe, a pour expression :

$$E_O = e^{-ikz+\omega t}$$

En supposant que l'amplitude de cette onde est unitaire, l'onde diffusée est alors modélisée par une onde sphérique, de la forme :

$$E_{sca} = S(\theta)\frac{e^{-ikr+\omega t}}{ikr}$$

Cette expression fait apparaître une fonction S(θ) qui représente l'amplitude de l'onde diffusée par la particule biologique. Elle fait notamment apparaître l'information de distribution spatiale de l'onde diffusée en fonction du paramètre θ.

Par définition, le paramètre d'extinction est défini pour θ = 0 et il est noté Cext.

Dans la suite, on démontre que ce paramètre d'extinction Cext peut s'exprimer en fonction de la fonction S(θ).

Proche de l'axe optique du dispositif, on observe l'approximation suivante :

$$r = \left(x^2 + y^2 + z^2\right)^{1/2} = z(1 + \frac{x^2+y^2}{z^2})^{1/2} \approx z(1 + \frac{x^2+y^2}{2z^2})$$

Dans la mesure où x,y << z, l'onde au voisinage de l'axe z s'écrit :

$$E_{sac} + E_0 = S(\theta = 0)\frac{e^{-ikz(1+\frac{x^2+y^2}{2z^2})+\omega t}}{ikz} + E_0$$

$$= S(\theta = 0)\frac{e^{-ikz+\omega t}e^{-ikz(\frac{x^2+y^2}{2z^2})}}{ikz} + E_0$$

$$= S(\theta = 0)\frac{E_0 e^{-ikz(\frac{x^2+y^2}{2z^2})}}{ikz} + E_0$$

$$= E_0\left\{S(\theta = 0)\frac{e^{-ikz(\frac{x^2+y^2}{2z^2})}}{ikz} + 1\right\}$$

L'intensité est obtenue en prenant le carré du module de ce nombre complexe :

$$I(x,y) = |E_{sca} + E_o|^2 = |E_0|^2\left\{1 + \frac{2}{kz}\mathrm{Re}\left\{\frac{S(\theta = 0)}{i}e^{-ikz(\frac{x^2+y^2}{2z^2})}\right\}\right\}$$

Le terme en accolade est alors le module d'un nombre complexe 1 +w. Par ailleurs, le terme du second ordre a été négligé devant 1 puisque l'on suppose z suffisamment grand.
Cette intensité peut être intégrée dans l'aire d'une petite pupille centrée sur l'axe z. Cette intégrale s'écrit :

$$\iint_{pupille} I(x,y)dxdy = Io\iint_{pupille}dxdy + \frac{2Io}{kz}\iint_{pupille}\mathrm{Re}\left\{\frac{S(\theta = 0)}{i}e^{-ikz(\frac{x^2+y^2}{2z^2})}\right\}dxdy$$

Cette intégrale indique que le flux de photons traversant la pupille est la résultante de deux termes : le premier terme représente le flux photonique en l'absence de particule biologique, et le second terme représente le flux de photons en présence de la particule, laquelle extrait une fraction de la pupille par diffraction. La conservation du flux lumineux impose que ce terme soit négatif.
Selon les notations de H. C. van de Hulst on écrit :

$$\iint_{pupille} I(x,y)dxdy = O - C$$

Toujours selon Van de Hulst le second terme se décompose en deux intégrales de Fresnel chacune faisant apparaître le terme $(2\pi z/ik)^{1/2}$. Dans la limite où l'intégration est étendue à $\infty$ dans le plan (x;y), on en déduit la formule fondamentale suivante :

$$C_{ext} = \frac{4\pi}{k^2} \operatorname{Re}\{S(\theta = 0)\}$$

Où $k = 2\pi / \lambda$
Et

$$Q_{ext} = \frac{4}{x^2} \operatorname{Re}\{S(\theta = 0)\}$$

Où x = ka avec a, rayon de la particule.

Il est ainsi possible de déterminer la fonction $S(\theta = 0)$ par de simples considérations géométriques.

Le raisonnement de Van de Hulst permet en effet de déterminer cette fonction par le calcul de l'intégrale suivante :

$$S(\theta = 0) = \frac{k^2}{2\pi} \iint \left[1 - e^{-i\rho \sin \varphi}\right] dxdy$$

où l'intégrale est prise dans l'ombre projetée de la particule biologique.

Cette intégrale peut être calculée exactement pour donner l'expression suivante :

$$S(\theta = 0°) = x^2 K(i\rho)$$

Où

$$K(w) = \frac{1}{2} + \frac{e^{-w}}{w} + \frac{e^{-w} - 1}{w^2}$$

Et donc en moyennant ces résultats on peut écrire le coefficient d'extinction de la forme :

$$Qext = 2 - (4/\rho) \sin \rho + (4/\rho^2)(1 - \cos\rho)$$

$$\rho = 2 \ (2\pi/\lambda) \ a \ |m - 1|$$

m=IDX correspond à la réfringence de la microparticule telle que nous l'avons définie en introduction à ce document. Dans le cas d'un globule rouge, m peut être donné par la formule suivante :

$$m - 1 = (\alpha / no) *Hc - i (Ln 10/ \pi M) * (\lambda \varepsilon_{um} / no) Hc$$

On remarque que la réfringence du globule rouge, et de manière générale de toute particule, est représentée par un nombre complexe. La partie réelle influence la phase de l'onde incidente. Elle peut par exemple résulter de l'analyse et des observations réalisées par R. Barer et S. Joseph dans l'article intitulé « Refractometry of living cells » (Quarterly Journal of Microscopical Science, Vol. 95, part 4, pp. 399-423, Dec. 1954). La partie imaginaire est responsable de l'absorption et son développement ne résulte que de l'application de la loi de Beer-Lambert.

Le signal Si issu du détecteur D2 peut être calculé par la formule suivante :

$$Si = Po - Qext * Po* (\pi r^2 / axb)$$

Après filtrage du signal photoélectrique par un circuit électronique du type passe haut, on détermine l'extinction engendrée par la présence de la particule par la formule suivante :

$$EXT = Po*Qext*(\pi r^2 / axb)$$

Avec les données numériques suivantes :

no = 1.34, indice du cytoplasme en l'absence d'hémoglobine pris égal à l'indice du fluide dans lequel le globule rouge baigne,
$N_L$ = 1.335, indice du fluide dans lequel baigne la particule,
$\alpha$= 0.0019 dL/g, constante qui dépend du soluté, ici l'hémoglobine,
Hc : 22 à 46 g/dl, plage de variation de l'hémoglobine corpusculaire,
M: 66650 D, masse moléculaire de l'hémoglobine,
$\lambda$= 0.650 $\mu$m, longueur d'onde d'illumination,
$\varepsilon$ $\mu$m : 0.2520 cm$^2$/ $\mu$mol, coefficient d'extinction molaire
Po= 1 00 $\mu$W, puissance du faisceau de lumière,
a=33 $\mu$m, plus petite dimension de la fenêtre d'analyse,
b = 100 $\mu$m, plus grande dimension de la fenêtre d'analyse.

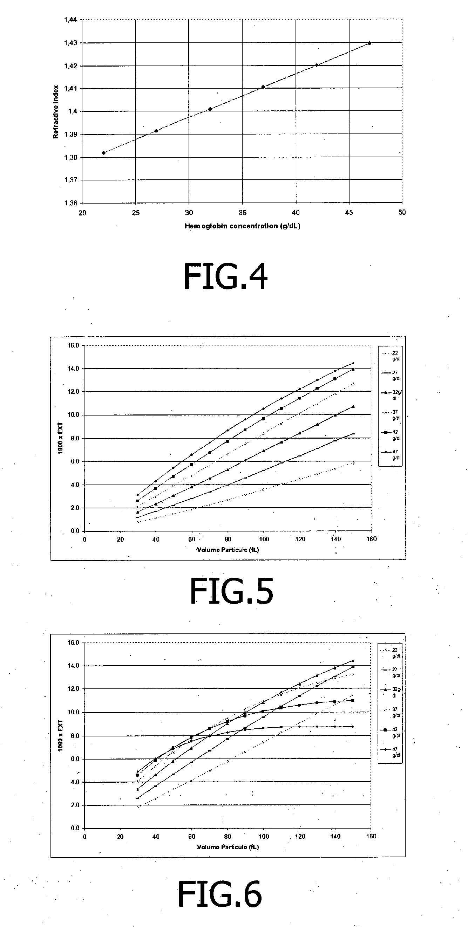

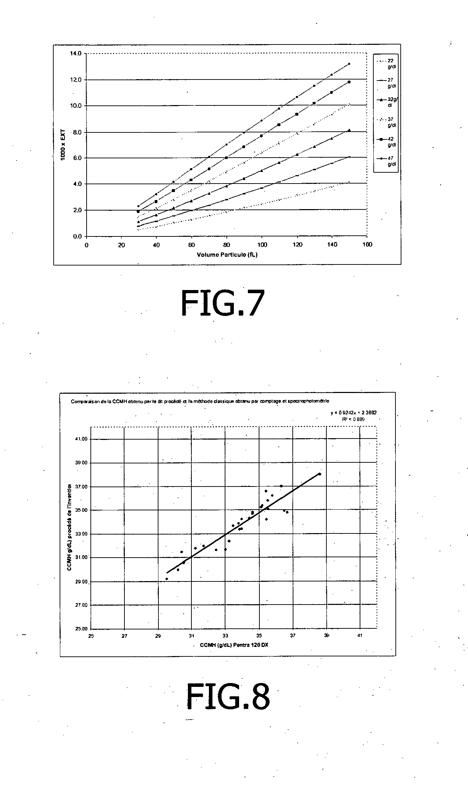

L'ensemble des ces données théoriques et numériques permettent de prévoir la courbe de la figure 4 qui montre l'indice de réfraction IDX d'un globule rouge en fonction de la concentration en hémoglobine.
La figure 5 montre plus précisément le signal d'extinction EXT en fonction du volume V d'une particule sphérique pour diverses valeurs équivalentes de la concentration en hémoglobine. La figure 5 nous renseigne sur le fait qu'à volume égal, plus un globule rouge est chargé en hémoglobine, plus son extinction sera importante.
Ce réseau de courbes est l'aboutissement du calcul précédemment exposé visant à démontrer que le signal d'extinction d'un globule rouge est fonction non seulement de son volume mais aussi de sa réfringence elle-même linéairement dépendante de la concentration en hémoglobine.
Cette solution n'est pas triviale puisque, à la longueur d'onde de 405 nm, le calcul du réseau de courbes est celui de la figure 6, indiquant qu'il n'existe pas de solution unique pour la détermination de (CHC, V) rendant la mesure de ces paramètres impossible à cette longueur d'onde.
Au contraire, une mesure dans l'infrarouge est plus favorable comme l'indique la figure 7, où la longueur d'onde d'illumination est de 800 nm.
La figure 8 compare les résultats de la mesure du paramètre de la Concentration Corpusculaire Moyenne en Hémoglobine (CCMH) de 28 échantillons de sang couvrant des valeurs basses et hautes de ce paramètre. L'abscisse correspond à la valeur de la CCMH obtenue par un analyseur de la gamme d'Horiba ABX (Pentra 120) alors qu'en ordonnée, est indiquée la valeur de ce paramètre déterminée par le procédé de l'invention correspondant à la moyenne calculée sur l'ensemble des érythrocytes pour lesquels le paramètre CHC a été mesuré. On note que le résultat (R$^2$ ~ 0,9) est satisfaisant compte tenu, d'une part, de la faible amplitude de ce paramètre qui est une constante de Wintrobe, et, d'autre part, de la différence des méthodologies appliquées pour déterminer ce paramètre. En effet, sur un analyseur d'hématologie, plusieurs mesures indépendantes sont combinées pour déterminer la valeur de la CCMH, par exemple: le compte total des globules rouges noté #GR, le volume globulaire moyen noté VGM et le poids d'hémoglobine dans l'échantillon noté Hb selon la formule suivante : CCMH calculée = Hb / (HT = VGM x # GR).
Dans l'invention, la CCMH est directement issue des mesures d'impédance et d'extinction, de sorte que le calcul ne fait intervenir que deux mesures indépendantes au lieu de trois.
En pratique, le dispositif utilisé pour acquérir les données expérimentales est celui décrit à la figure 2. Préalablement aux mesures selon le procédé de l'invention, un échantillon de sang est dilué par un réactif conçu pour rendre sphérique le globule rouge. Le pouvoir sphérisant est typiquement obtenu par un tensioactif. Ce réactif peut aussi comporter un colorant ou un fluorochrome. La présence de ces agents chimiques permet la mesure d'autres propriétés cellulaires tel que par exemple décrit dans le brevet FR 2 759 166 de la Demanderesse.
Ce principe de mesure étant établi, la suite décrit le modèle d'inversion c'est-à-dire la détermination des paramètres de la particule sphérique en fonction des mesures d'extinction et de volume par la méthode d'impédance. L'objectif est de rendre possible l'inversion des mesures alors réalisées.
Le modèle d'inversion est avantageusement déterminé à partir de données expérimentales dans le but de ne pas souffrir des approximations et des hypothèses introduites dans la résolution du-problème direct.
Pour résoudre le problème d'inversion, un ensemble d'émulsions est préparé à partir de solvants organiques choisis pour que leurs réfringences soient connues et proches de celles des particules biologiques analysées.

Pour le globules rouges, le choix s'est porté sur les solvants de la famille des alcanes pour lesquels les indices de réfraction sont dans la plage d'intérêt à la longueur d'onde d'illumination de 650 nm.

Le tableau ci-dessous donne ainsi les valeurs des indices de réfraction IDX des solvants utilisés:

| | |
|---|---|
| heptane | 1.39 |
| octane | 1.4 |
| nonane | 1.405 |
| decane | 1.41 |
| dodecane | 1.42 |

L'observation des émulsions permet de modéliser pour chaque série (hexane, heptane...), donc pour chaque indice de réfraction, la réponse en extinction optique en fonction du volume mesuré par impédance.

Différentes modélisations sont possibles. Dans la suite, un modèle logarithmique est choisi pour permettre la résolution du problème. La réponse en extinction EXT d'une série i est alors modélisée par :

$$EXT = k_i . \ln(RES + t) + o_i.$$

où $k_i$ et $o_i$ sont des paramètres de la série et t est une constante, ici par exemple 3000 pour le canal RBC/PLT, permettant d'améliorer la qualité des modèles $k_i$ et $o_i$ par « fitting ». On note ici que la constante t est variable en fonction de la machine utilisée et en fonction des particules analysées. Notamment, elle peut être différente pour l'analyse des globules blancs

L'expérience indique que de tels modèles logarithmiques peuvent être utilisés pour mettre en correspondance les réponses (Volume x Extinction) d'une émulsion. En effet, une émulsion de chaque solvant produit un ensemble de gouttelettes dont les volumes sont distribués continument dans la plage de mesure du dispositif selon l'invention. Chaque gouttelette a un indice de réfraction parfaitement défini par la nature du solvant.

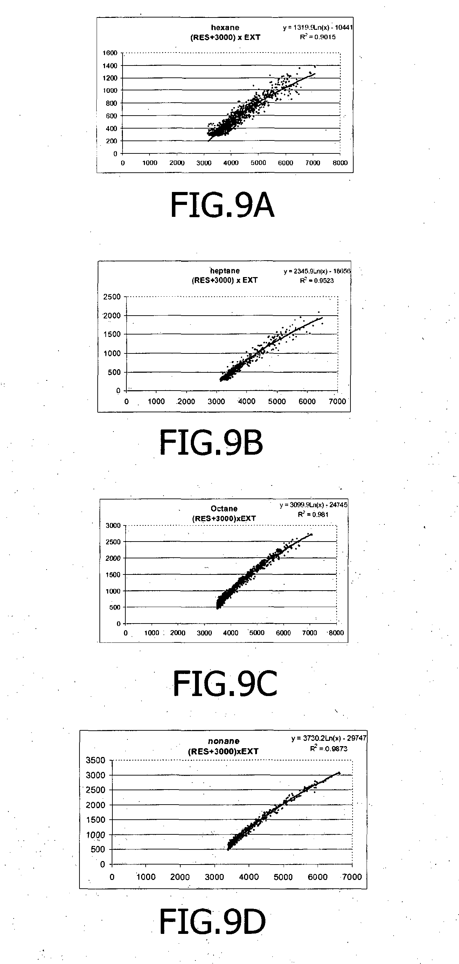

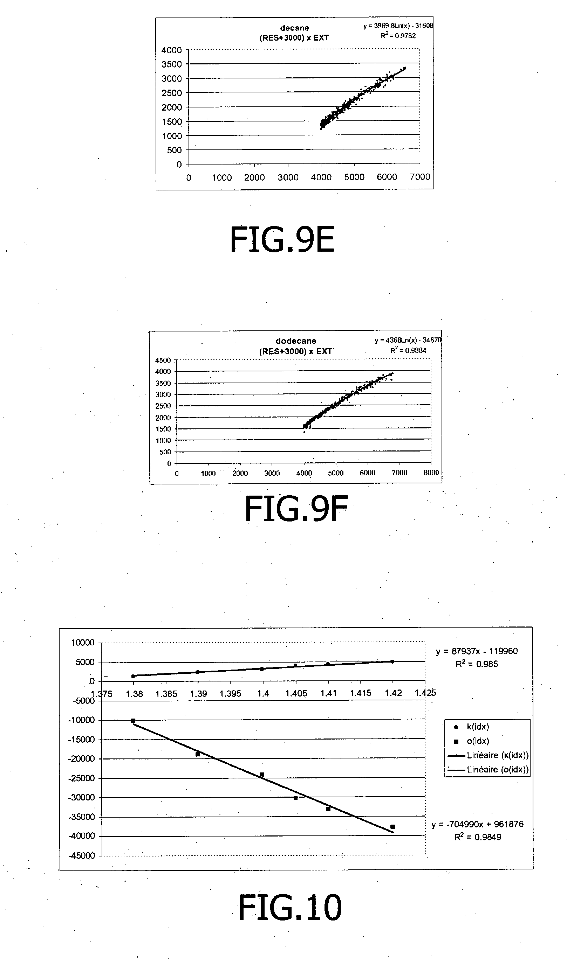

Ce fait est illustré sur les figures 9A à 9F où chaque gouttelette est représentée par un point sur le plan où l'abscisse correspond au volume V de la gouttelette, l'échelle étant ici représentée en nombre de canaux, et l'ordonnée correspond à l'extinction de la gouttelette, aussi exprimée en nombre de canaux.

Une fonction d'interpolation calculée est reportée pour chaque mesure sur le graphe, sous la forme $y = k_i . Ln(x + t) + o_i$ où i est l'indice du solvant i.

Le problème inverse consiste donc à déterminer, pour un indice de réfraction indéterminé, les paramètres de la modélisation logarithmique, c'est-à-dire les paramètres ki et oi.

Les données expérimentales obtenues donnent les cibles suivantes, pour la gamme d'indices considérés :

| | idx | k | O |
|---|---|---|---|
| hex | 1.38 | 1320 | -10441 |
| hept | 1.39 | 2346 | -18656 |
| oct | 1.4 | 3100 | -24745 |
| non | 1.405 | 3730 | -29747 |
| dec | 1.41 | 3970 | -31608 |
| dodec | 1.42 | 4368 | -34670 |

Il est donc possible de modéliser grossièrement ces coefficients en fonction de l'indice par des approximations affines données sur la figure 10.

On obtient ainsi, pour i étant l'indice :

$$k_i = a.i + b$$

$$o_i = c.i + d$$

a,b,c et d étant établis ici par cette approximation affine. Sur la figure 10 les paramètres sont : a=78519, b=-106853, c=-624927 et d= 850440.

L'association de cette approximation linéaire des coefficients avec la modélisation logarithmique nous permet de résoudre le problème inverse à partir des coefficients expérimentaux.

$$EXT = k_i.\ln(RES+t) + o_i$$
$$= (a.i + b).\ln(RES+t) + c.i + d$$
$$= (a.\ln(RES+t) + c).i + b.\ln(RES+t) + d$$

d'où

$$i = (EXT - b.\ln(RES+t) - d) / (a.\ln(RES+t) + c)$$

Le niveau d'extinction pour un volume donné mesuré par impédance permet donc de déterminer l'indice de réfraction.

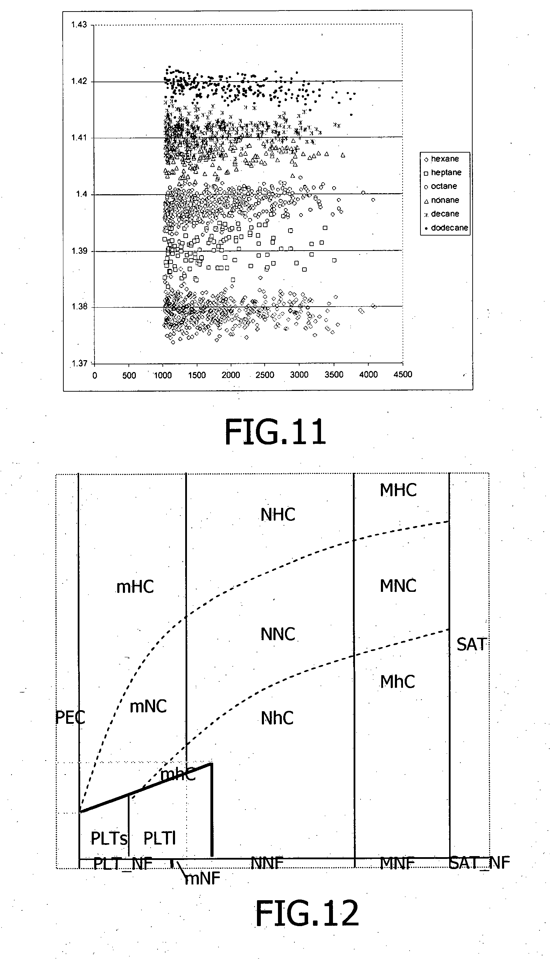

Cette faculté de déterminer l'indice est illustrée par la détermination de l'indice des émulsions de l'expérience. Le résultat est montré sur la figure 11.

Dans la suite est décrit le procédé de séparation des érythrocytes et des thrombocytes utilisant le procédé selon l'invention.

Le principe de cette séparation des érythrocytes, notés RBC, et des plaquettes, notées PLT, repose sur deux critères discriminants. Le premier est utilisé par la plupart des constructeurs d'automates d'hématologie. Il s'agit du volume.

En effet dans le cas de sangs normaux, les plaquettes PLT ont un volume moyen compris entre 6 et 10fL tandis que les globules rouges ont un volume moyen entre 80 et 100fL. La mesure de la hauteur d'une impulsion résistive est représentative du volume ce qui permet de classer ces deux populations.

Un deuxième critère peut-être employé pour améliorer la discrimination RBC/PLT. Il s'agit de la concentration en hémoglobine. En effet, les plaquettes PLT en sont dépourvues tandis que les globules rouges ont une concentration moyenne en hémoglobine comprise entre 31 et 35g/dl. La mesure de la hauteur de l'impulsion d'extinction qui caractérise le masquage optique reflète ce contenu en hémoglobine.

Il apparaît donc judicieux de réaliser une séparation à partir de la position des événements dans la matrice RBC/PLT par seuillage 2D en divisant la matrice en polygones contigus.

On ajoutera ensuite une distinction dans les classes des RBC selon l'hémoglobine corpusculaire de chaque cellule à l'aide d'un seuil représenté en trait pointillé sur la figure 12.

Les dispositions des populations donnent la forme de la matrice RBC/PLT dans le plan RESxEXT représentée sur la figure 12.

L'algorithme de classification opère en deux étapes :

- Classification des érythrocytes et des plaquettes.
- Sous-classification des érythrocytes selon leur hémoglobine, et des plaquettes selon leur densité.

Ces classifications reposent sur le même principe qui consiste à réaliser un gating c'est-à-dire un fenêtrage ou une sélection manuelle par un choix de seuils au moyen d'une matrice RES x EXT, VOL x CHC (concentration en hémoglobine corpusculaire) ou VOL x DENS (densité plaquettaire).

Dans la suite est expliqué le fonctionnement d'une opération de « gating ».

Tout d'abord est créé un polygone dans un référentiel sous forme d'un nombre fini de segments dont le premier est attaché au dernier pour former un polygone.

Un point de référence est ensuite choisi à l'extérieur du référentiel.

On teste si un point donné est dans le polygone en comptant combien de segments du polygone sont croisés par le segment reliant le point de référencé au point testé.

Si et seulement si ce nombre est impair, alors le point est dans le polygone.

Si le segment du point de référence au point testé passe par un sommet du polygone, on déplace le point de référence.

Ensuite, on teste si deux segments [P1-P2] et [P3-P4] se croisent de la manière suivante.

Les grandeurs suivantes sont d'abord calculées :

$$Xa = X2 - X1$$

$$Ya = Y2 - Y1$$

$$Xb = X3 - X1$$

$$Yb = Y3 - Y1$$

$$Xc = X3 - X4$$

$$Yc = Y3 - Y4$$

$$d = Xa.Yc - Ya.Xc;$$

si d = 0, les segments sont alignés.

Dans ce cas, s'ils appartiennent à la même droite (pente, offset) et si, sur cette droite, une extrémité d'un segment est située entre les deux extrémités de l'autre segment alors et seulement alors les segments se croisent.

Sinon on calcule:

{

$$s = (Xa.Yb - Ya.Xb) / d$$

$$t = (Xb.Yc - Yb.Xc) / d$$

si et seulement si ((s<=1) et (t<=1) et (s>=0) et (t>=0)) alors les segments se croisent

}

Sur la matrice synthétique représentée sur la figure 12, plusieurs types de seuils sont représentés par des lignes de traits différents. Les seuils en traits fins sont des seuils fixes. Ceux-ci sont déterminés par un paramétrage défini par défaut à l'exécution de l'algorithme de calcul. Les seuils en traits gras correspondent à des seuils automatiques, ceux qui sont susceptibles d'être recherchés par l'algorithme de classification.

Le tableau suivant donne les classes de l'algorithme de classification RBCPLT.

| Classe | Sous-classes | Signification |
|---|---|---|
| | PEC | Petit élément cellulaire |
| PLT | PLTs | Petites plaquettes |
| | PLTl | Grosses plaquettes |
| | PLTs_NF | Petites plaquettes (extinction nulle) |
| | PLTs_NF | Petites plaquettes (extinction nulle) |

(suite)

| Classe | Sous-classes | Signification |
|---|---|---|
| RBC | mhC | Microcytes hypochromes |
| | mNC | Microcytes normochromes |
| | mHC | Microcytes hyperchromes |
| | mNF | Microcytes d'extinction nulle |
| | NhC | Erythrocytes normaux hypochromes |
| | NNC | Erythrocytes normaux normochromes |
| | NHC | Erythrocytes normaux hyperchromes |
| | MNF | Erythrocytes normaux d'extinction nulle |
| | MhC | Macrocytes hypochromes |
| | MNC | Macrocytes normochromes |
| | MHC | Macrocytes hyperchromes |
| | MNF | Macrocytes extinction nulle |
| SAT | SAT | Evénements en saturation résistive |
| | SAT_NF | Evénements en saturation résistive d'extinction nulle |

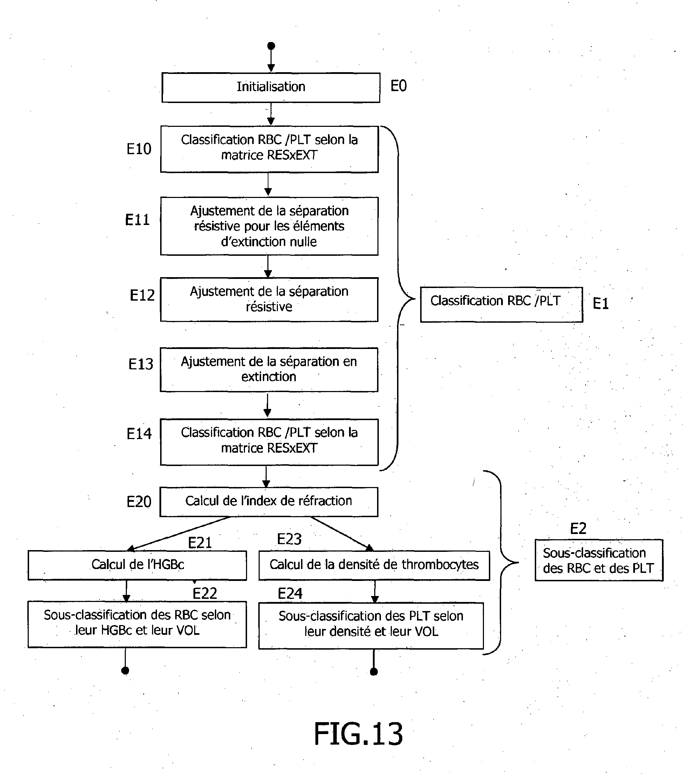

La figure 13 représente un diagramme algorithmique de classification.

La première étape E0 de la classification consiste à initialiser chaque événement à une classe NI.

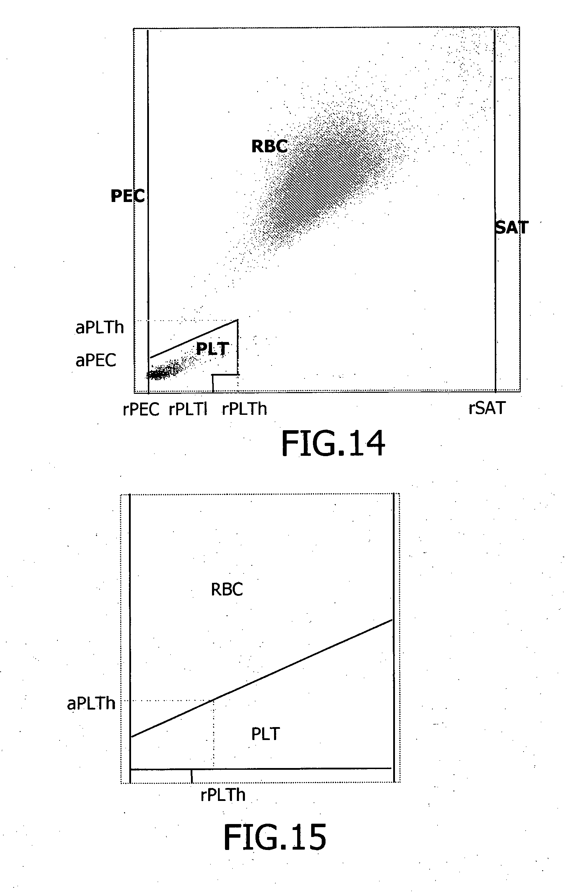

Cette étape E1 classe tous les événements selon la matrice RESxEXT représentée sur la figure 14. Commence alors une étape E10 de classification RBC/PLT proprement dite.

On identifie ainsi les populations RBC (érythrocytes), PLT (plaquettes), PEC (petits éléments cellulaires) et SAT (éléments en saturation) dans une sous-étape E10 préliminaire de l'étape de classification RBC/PLT.

Pour cette première sous-étape E10 qui consiste en un premier gating, des seuils rPLTh et aPLTh sont utilisés afin d'avoir une pente et une ordonnée à l'origine de la séparation en extinction. On ne limitera pas la séparation des plaquettes à rPLTh. Ce gating repose donc sur la matrice de la figure 15.

Ensuite, dans une sous-étape E11, un ajustement de la séparation résistive des éléments d'extinction nulle est réalisé. Il est destiné à obtenir une bonne séparation entre les plaquettes et les érythrocytes d'extinction nulle. Les plaquettes non vues en optique sont de petite taille. Cela justifie donc de ne se servir que de l'information volumique pour les différencier des érythrocytes. Ce choix semble meilleur que celui qui consisterait à une extrapolation d'un seuil trouvé à partir des plaquettes d'extinction non nulle.

Pour cette sous-étape E11, les seuls événements classés en plaquettes et érythrocytes sont pris en compte. Leur abscisse H_RES est évaluée pour la création d'un histogramme. Une vallée est recherchée sur celui-ci. Si cette vallée montre une double population d'érythrocytes car le nombre d'occurrences dans la vallée est important, une autre vallée est recherchée. Une fois la vallée entre plaquette et érythrocyte trouvée, si elle est suffisamment marquée, le seuil rPLTl est réajusté sur celle-ci.

Puis, dans une sous-étape E12, un ajustement de la séparation résistive est réalisé. Pour cela, la pente et l'ordonnée à l'origine de la séparation en extinction est calculée au préalable à l'aide des expressions suivantes :

$$slope = \frac{aPLTh - aPEC}{rPLTh - rPEC}$$

$$offset = aPEC - slope \cdot rPEC$$

Cela est nécessaire au recalcul du seuil aPLTh après un l'ajustement du seuil rPLTh de la sous-étape E11.

Seuls les événements classés en plaquettes sont ici considérés. Leurs abscisses H_RES sont utilisées pour la création d'un histogramme. Une vallée est recherchée sur celui-ci. Si elle est suffisamment marquée, le seuil rPLTl est réajusté sur celle-ci. Cette sous-étape prévoit le cas où la séparation en extinction coupe le nuage des érythrocytes.

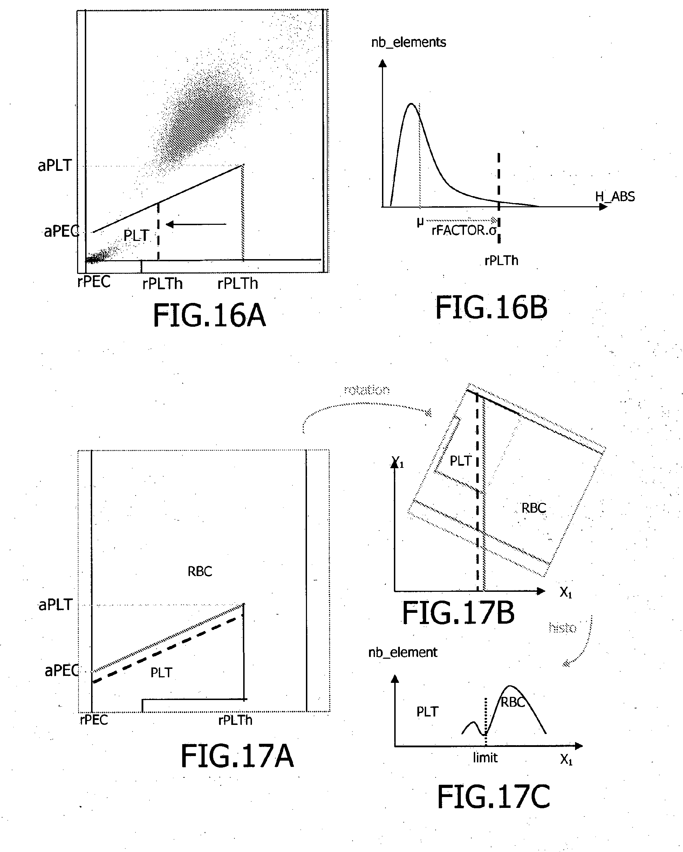

Si aucune vallée n'a été trouvée ou qu'elle n'est pas suffisamment distincte, la valeur de rPLTh est alors calculée de manière statistique. Cela signifie à priori que la séparation en extinction a isolé uniquement les plaquettes. On déduit de ce nuage une moyenne µ et un écart type σ. Cela est illustré sur les figures 16A et 16B.

On pose alors *rPLTh=µ+rFACTOR.σ* et on déduit alors: *aPLTh = slope · rPLTh + offset*

Dans une sous-étape E13 d'ajustement de la séparation en extinction, seuls les événements classés en plaquettes et érythrocytes dont l'extinction est non nulle sont pris en compte.

Ainsi qu'illustré sur les figures 17A à 17C, une rotation d'angle $\theta = 270 - a\tan(slope) \times \dfrac{360}{2\pi}$ avec

$slope = \dfrac{aPLTh - aPEC}{rPLTh - rPEC}$ du plan est réalisée autour du centre (2048, 2048) :

$$X_1 = \cos\theta \, (X - 2048) + \sin\theta \, (Y - 2048) + 2048$$

$$Y_1 = -\sin\theta \, (X - 2048) + \cos\theta \, (Y - 2048) + 2048$$

Les abscisses X1 des événements sont évaluées pour la création d'un histogramme. Une vallée est recherchée sur celui-ci. Si elle est suffisamment marquée, les seuils aPEC et aPLTl sont alors recalculés en fonction de celles-ci sinon ils restent inchangés.

Une sous-étape E14 réalise alors la classification RBC/PLT selon la matrice RESxEXT avec les seuils réajustés.

Une étape E2 de sous-classification des RBC et PLT a alors lieu.

Cette étape E2 consiste en la classification des sous-populations érythrocytaires et thrombocytaires.

Dans une première sous-étape E20, l'indice de réfraction de chaque particule est calculé comme suit:

$$IDX = \frac{H\_ABS - b.\ln(H\_RES + 3000) - d}{a.\ln(H\_RES + 3000) + c}$$

avec A, B, C, D et T coefficients dépendants des conditions expérimentales et du cycle de mesure.

Ensuite, afin de pouvoir séparer les populations érythrocytaires hypochrome, hyperchrome, normochromes, il est nécessaire de calculer leur concentration en hémoglobine corpusculaire (CHC) dans une sous-étape E21. Ainsi, la transformation de l'indice de réfraction en concentration en hémoglobine corpusculaire est appliquée aux érythrocytes, sur la base de la classification des événements et selon l'expression suivante :

$$HGBc = hgbcSlope * IDX + hgbcOffset .$$

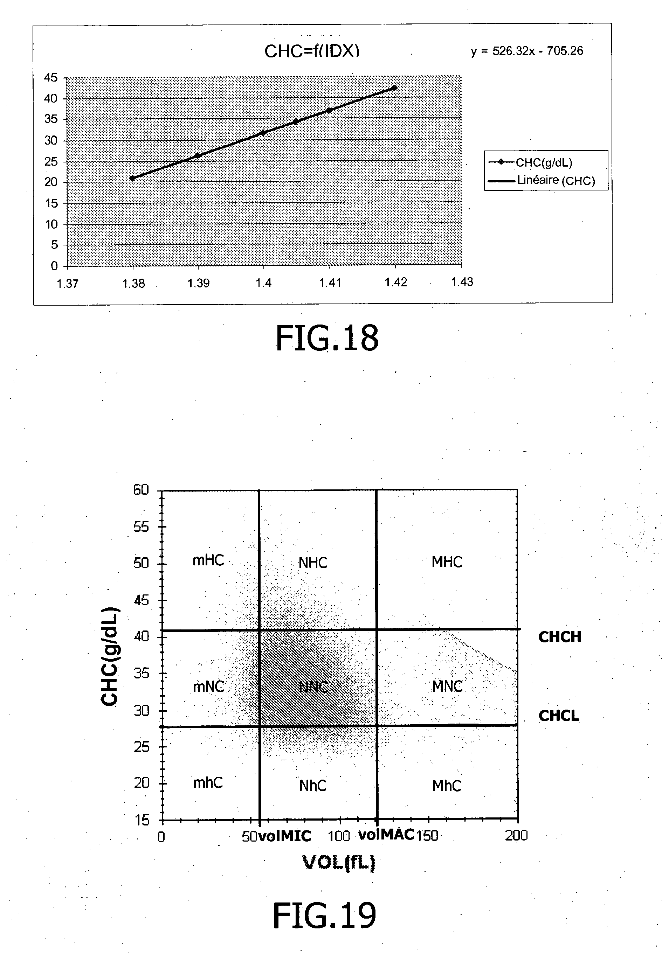

La figure 18 montre ainsi le calcul de la concentration en hémoglobine corpusculaire à partir de l'indice de réfraction.

Dans une sous-étape E22, une sous-classification des érythrocytes selon leur volume et leur concentration hémoglobine corpusculaire est réalisée à partir de la matrice VOL x CHC. Cela permet de différencier les populations hypochrome, hyperchrome et normochrome, et les populations microcytaire et macrocytaire. Neuf sous-populations érythrocytaires sont ainsi obtenues et peuvent être représentées comme sur la figure 19.

Si leur volume est inférieur au seuil *volMic,* il s'agit de microcytes, s'il est supérieur à *volMac,* il s'agit de macrocytes et sinon ils sont considérées comme normaux.

Ensuite, si leur concentration en hémoglobine est inférieure au seuil *CHCL,* il s'agit d'hypochromes, si leur concentration en hémoglobine est supérieure au seuil *CHCH,* il s'agit d'hyperchromes et sinon ils sont considérés comme normaux.

De plus comme la densité plaquettaire renseigne sur l'activation plaquettaire, la densité des thrombocytes est aussi également calculée en parallèle dans une sous-étape E23. De la même manière, la densité des thrombocytes peut donc être évaluée par une autre transformation affine pour les événements classifiés comme tels, et leur volume étant connu par la mesure d'impédance, il est possible d'en déterminer la masse sèche :

$$PLT\_COMPO = DENS = compoSlope * IDX + compoOffset$$

Ensuite, dans une sous-étape E24 une sous-classification des thrombocytes selon leur volume et leur densité est réalisée.

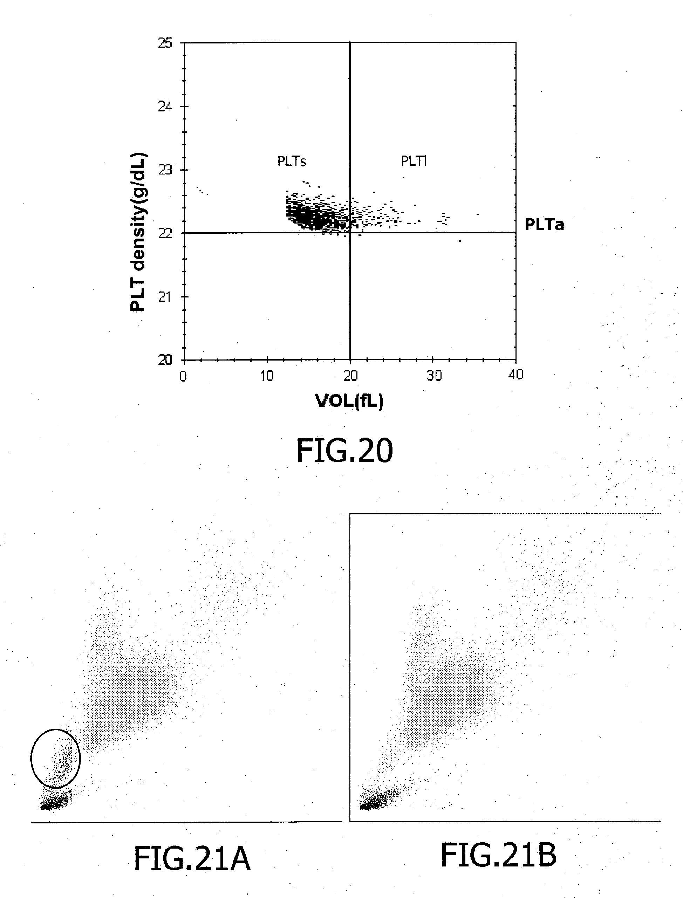

A partir de la matrice VOL x DENS visible sur la figure 20, une sous-classification des plaquettes est effectuée afin de différencier les plaquettes activées, les petites plaquettes et les macroplaquettes. Ainsi nous obtenons quatre sous-populations de plaquettes sur la figure 20.

Si leur volume est inférieur à 20fl il s'agit de petites plaquettes, s'il est supérieur à 20fl il s'agit de macroplaquettes.

Ensuite, si leur densité est inférieure au seuil PLTa il s'agit de plaquettes activées.

La séparation dans la matrice RESxEXT rendue possible par l'invention se révèle très efficace dans le cas de microcytose. En effet le volume des globules rouges étant plus faible, il tend à être voisin du volume des plus grosses plaquettes. Il est donc difficile d'établir de manière certaine une séparation entre les plus grosses plaquettes et les plus petits microcytes avec seulement une mesure résistive. On comprend ici l'avantage de la séparation selon l'invention par rapport à une séparation purement résistive.

Par ailleurs, il serait également difficile de séparer les plaquettes des microcytes uniquement grâce à l'extinction, puisque le contenu en hémoglobine de ces derniers est naturellement faible à cause de leur taille. En revanche, en conjuguant ces deux mesures, il devient tout à fait possible de réaliser une séparation correcte.

Les figures 21A et 21B montrent une comparaison de classifications sur un cas de microcytose.

Dans le cas de macroplaquettes, cette séparation s'avère tout aussi remarquable. Dans ce cas, 26% des plaquettes sont des macroplaquettes qui sont identifiées comme étant des érythrocytes avec la séparation sur le canal résistif.

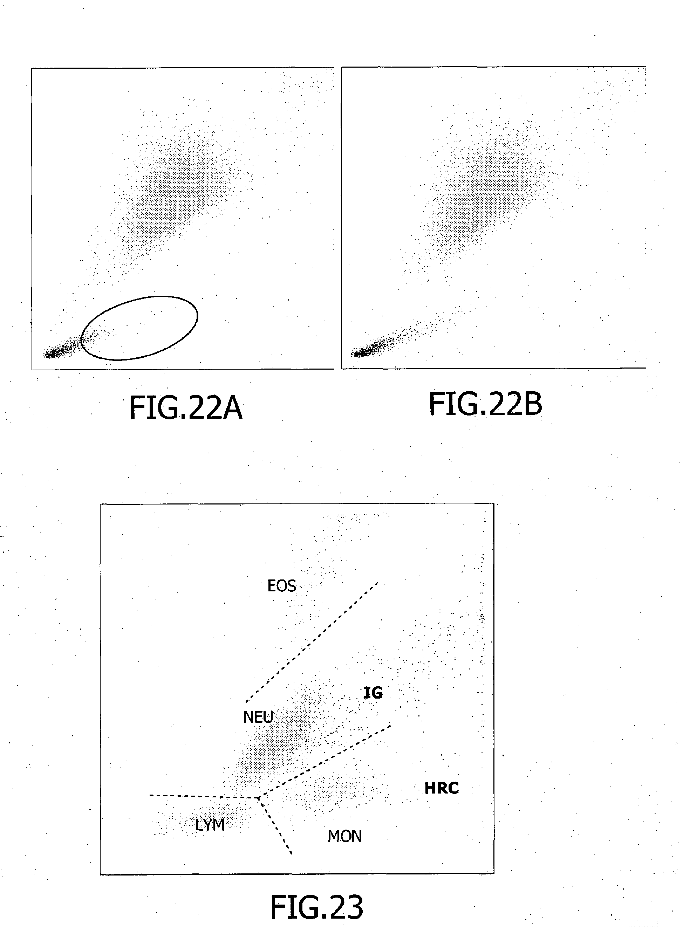

Les figures 22A et 22B montrent une comparaison de classifications sur un cas avec macroplaquettes.

La qualité de la classification mise en oeuvre avec l'invention présente l'intérêt clinique de permettre le diagnostic de β-Thalassémie.

Il est connu que les thalassémies sont caractérisées par une anémie microcytaire hypochrome. En effet, il a été montré que le ratio entre le pourcentage de microcytes sur celui d'hypochromes était un moyen fiable de différentiation d'une anémie ferriprive d'une β-thalassémie.

Elle permet aussi d'avoir accès à l'activation des plaquettes car le MPD (pour « Mean Platelet Density » en anglais) permet de déterminer le taux de plaquettes activées et donc potentiellement le risque de thrombose.

Elle permet enfin la détection d'anomalies qualitatives des plaquettes, notamment la présence de macroplaquettes.

Dans la suite est présentée succinctement la classification des globules blancs utilisant l'invention.

La figure 23 représente une matrice RESxEXT pour l'analyse des globules blancs utilisant un gating pour séparer les populations.

Avec l'invention, des statistiques 2D sont calculées dans le plan RESxEXT ou VOLxIDX pour les points considérés, afin de trouver une régression linéaire.

La pente de la droite de tendance est extraite, et on réalise une rotation du plan pour mettre cette droite à l'horizontale.

On refait alors des statistiques 1D et les écarts-type des x et des y donneront respectivement un grand axe et un petit axe d'une ellipse au travers de 2 paramètres Xc et Yc qui donnent les axes en écarts-type.

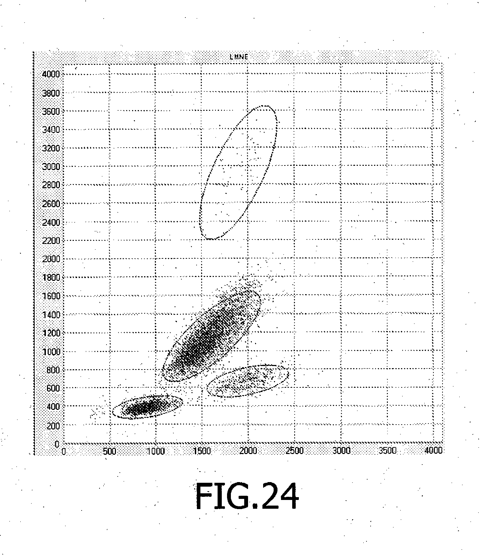

On obtient une ellipse (par exemple Xc, Yc) signifiant que le grand axe est égal à Xc fois l'écart-type des x après rotation, et que le petit axe est égal à Yc fois l'écart-type des y après rotation. En réalité, ces facteurs sont ajustés automatiquement en fonction du nombre d'événements de la population considérée, et de la nature de cette population. Ce type d'ellipse sera avantageusement affiché sur une matrice RESxEXT à la manière représentée sur la figure 24 ou sur une matrice VOLxIDX.

Sur cette figure, les neutrophiles (NEU) sont entourés par une ellipse de 2.5 en grand et petit axes. Les lymphocytes sont quant à eux entourés par une ellipse de 2.0 en grand et petit axes jusqu'à 30 événements, de 2.25 de 30 à 100 événements, et de 2.5 au delà de 100 événements.

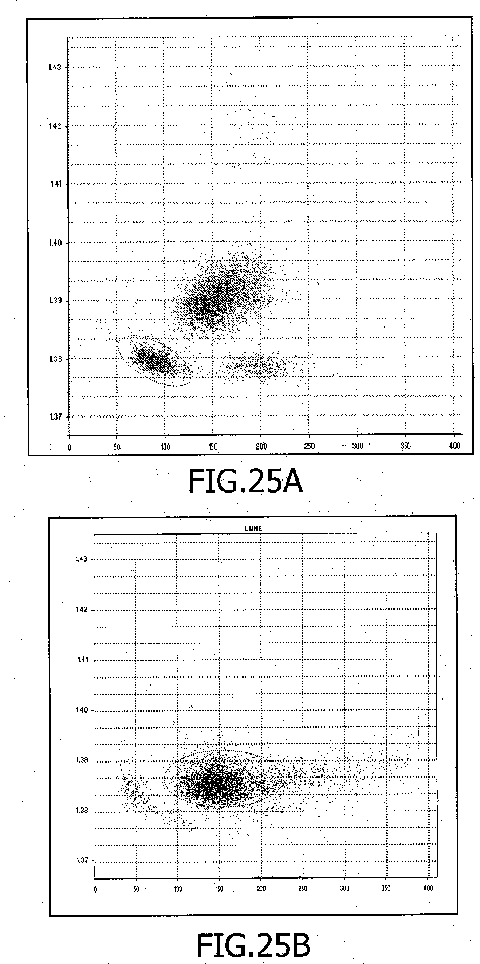

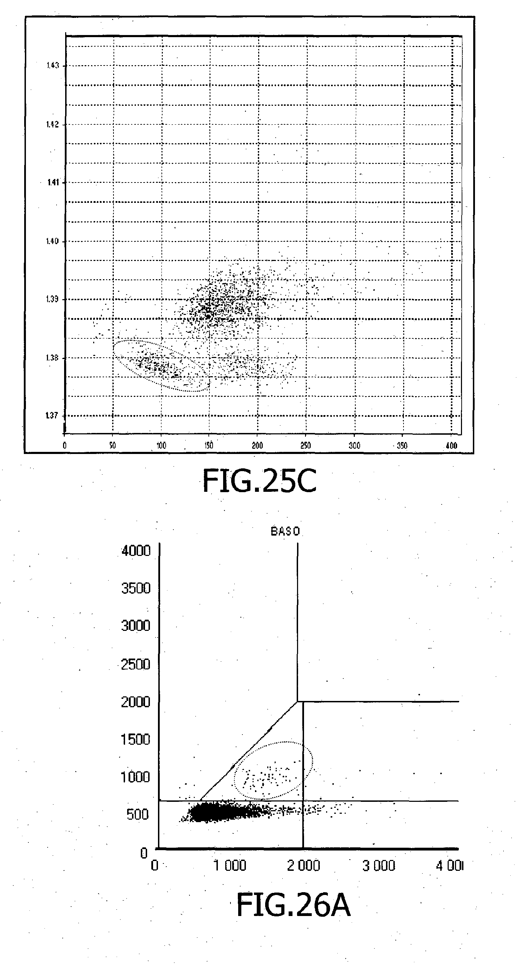

Les figures 25A, 25B et 25C représentent respectivement pour un sang normal et deux sangs pathologiques les matrices VOLxIDX sur lesquelles on peut créer des ellipses.

Sur la figure 25B, on peut ainsi remarquer la présence de neutrophiles granuleux immatures et de formes hyposegmentées ou dégranulées. On voit aussi que la hauteur moyenne des neutrophiles est inférieure à celle observée pour un sang normal : 1384 au lieu de 1391.

Sur la figure 25C, on remarque une position des lymphocytes plus basse que dans un sang normal : 1378 au lieu de 1383.

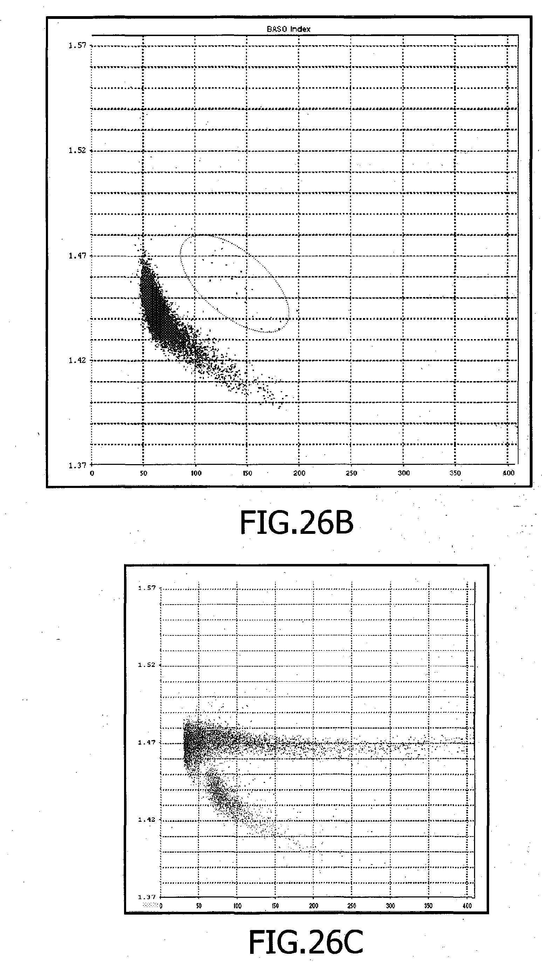

Les figures 26A, 26B et 26C montrent une classification des basophiles obtenue sur une autre préparation à l'aide d'un réactif tel que celui décrit dans le brevet FR 2 791 138.

La figure 26A montre la classification dans un plan RESxEXT où les basophiles sont entourés par une ellipse.

La figure 26B montre le même sang mais dans le plan VOLxIDX. Le nuage de points correspondant aux basophiles est entouré par une ellipse.

La figure 26C montre le cas d'une interférence due à la présence d'intra-lipides. On observe une distribution d'indice ayant un pic à une valeur de l'ordre de 1,47 qui est une valeur élevée pour des leucocytes dans les conditions expériences de l'invention.

L'invention permet donc de distinguer des interférences au dessus de 1,46 d'indice de réfraction. Dans cette fraction d'indice élevé, on trouve un continuum de volumes typique d'une émulsion. Il devient alors possible de signaler un problème dans l'analyse de l'échantillon.

On remarque enfin que diverses mises en oeuvre peuvent être réalisées selon les principes de l'invention.

Par exemple, le procédé de mesure de la réfringence particulaire selon l'invention peut être couplé à une mesure de fluorescence comme indiqué à la figure 27. Dans un tel montage, le procédé de mesure de la réfringence particulaire, basé sur une mesure de volume par méthode électrique, et sur une mesure d'extinction optique selon l'invention, est complété par une mesure de fluorescence. Cette mesure est rendue possible particule à particule en utilisant un colorant des acides nucléiques tel que celui contenu dans les réactifs « Fluowhite » ou « Fluored » (décrits dans les brevets FR 2 821 428 et FR 2 759 166).

Dans ces brevets, on cite le thiazole orange comme moyen de marquage des acides nucléiques. Ainsi, dans le dispositif de la figure 27, une première source de lumière S1, tel qu'une Diode Electro-Luminescente est agencée de manière à éclairer un flux particulaire traversant hors du plan de la figure 27 au point I au sein d'une chambre de mesure M. Au point I est aussi focalisé un deuxième faisceau de mesure provenant d'une seconde source de lumière de sorte que les faisceaux issus de S1 et S2 sont conjugués au point I, chacun émergeant par une face de la chambre de mesure M.

Cette disposition d'éclairage est par exemple décrite par la demanderesse dans la demande de brevet FR0854229. A noter que le premier faisceau de lumière est mis en forme par une première combinaison optique de type L1 pour former un faisceau de lumière présentant les caractéristiques d'éclairage décrit dans la présente demande de brevet, à savoir un faisceau de lumière de section rectangulaire axb dont les dimensions sont toujours égales à a = 30 $\mu$m et b= 90 $\mu$m de sorte que le facteur d'aspect soit a/b = 1 : 3. La longueur d'onde d'illumination est centrée sur $\lambda$ =650 nm avec une largeur spectrale de $\delta\lambda$ =30 nm conférant au système une longueur de cohérence Lc de l'ordre de $\lambda/\delta\lambda \sim$ 15 $\mu$m. L'ouverture numérique est ON1 = ON2= 0,3. Dans cet exemple, nous traiterons le cas d'une seconde source de lumière S2 constituée par une diode laser à semi-conducteur émettant une lumière sensiblement monochromatique centrée à la longueur d'onde de 488 nm. Dans ces conditions d'illumination, nous allons décrire la configuration du système de détection couplé à la chambre de mesure.

Ce système de détection est couplé à la chambre de mesure dans la direction de la source de lumière de plus faible cohérence, c'est-à-dire S1. Il est donc couplé à quatre vingt dix degrés de la source de plus forte cohérence, c'est-à-dire S2. Les lumières d'interaction entre la microparticule et les faisceaux d'illumination, sont collectés par une optique de réception unique, notée L2, conjuguée en I, c'est-à-dire que le faisceau de lumière issu du point I est rendu parallèle par l'optique F2.

Ce faisceau de lumière comporte diverses composantes spectrales qui sont analysées par le jeu de filtres F1, F2, et F3 de manière à différencier, dans ce cas particulier, d'une part la lumière sur laquelle est réalisée la mesure d'extinction et, d'autre part la lumière de fluorescence.

Dans le cas particulier où les acides nucléiques ont été préalablement marqués par la molécule de thiazole orange, tel que décrit dans le brevet FR 2 759 166, le filtre F1 est un filtre de type dichroïque qui va réfléchir à quatre vingt dix degrés du faisceau incident toutes les composantes spectrales inférieures à 580 nm et transmettre les composantes spectrales supérieures à 580 nm.

Les filtres F2 et F3 sont des filtres du type passe bande qui permettent d'optimiser la réjection des composantes spectrales qui ne sont pas souhaitées au niveau des détecteurs D1 et D2. Notamment, le détecteur D1 ne doit être sensible qu'aux composantes spectrales de la fluorescence du thiazole orange limitées à une bande spectrale de largeur 50 nm centrée à 530 nm.

Au niveau de D1, la réjection des autres longueurs d'onde doit être supérieure à $10^5$ notamment pour les longueurs d'onde issues de la source S1 qui illumine totalement la pupille de l'optique de réception L2.

F1, F2 et F3 sont préférentiellement des filtres multi-diélectriques. Compte tenu de la définition de la source S1, le filtre F2 est naturellement centré à la longueur d'onde de 650 nm avec une bande passante de l'ordre de 50 nm. Ainsi, dans cette définition de montage, il est possible de mesurer pour chaque particule trois mesures physiques, une mesure électrique représentative du volume de la particule, une mesure d'extinction liée à la réfringence de la particule, et enfin une mesure de fluorescence liée au contenu en acides nucléiques de la particule analysée. Ce montage est par exemple particulièrement avantageux pour mesurer la réfringence des globules rouges immatures que sont les réticulocytes.

La valeur de fluorescence permet de séparer les érythrocytes, préalablement identifiés par la séparation érythrocytes / plaquettes, des réticulocytes à l'aide d'un simple seuillage. Si la valeur de la fluorescence dépasse le seuil, alors les particules sont reclassées en réticulocytes comme montré sur la figure 28.

Le seuil de séparation entre érythrocytes et réticulocytes peut être ajusté de manière automatique par analyse statistique sur les populations préalablement identifiées comme érythrocytaires. Pour cela on crée un histogramme de fluorescence duquel sont extraits l'écart-type noté fSigma et le maximum de densité noté fMode.

On détermine alors :

$$seuilSéparation = fMode + fF1SigmaCoef*fSigma + fF1Offset,$$

où fF1SigmaCoef et fFlOffset sont des paramètres ajustables.

On procédera ensuite classiquement comme cela est fait pour les populations érythrocytaires afin de déterminer leur indice de réfraction puis leur hémoglobine corpusculaire.

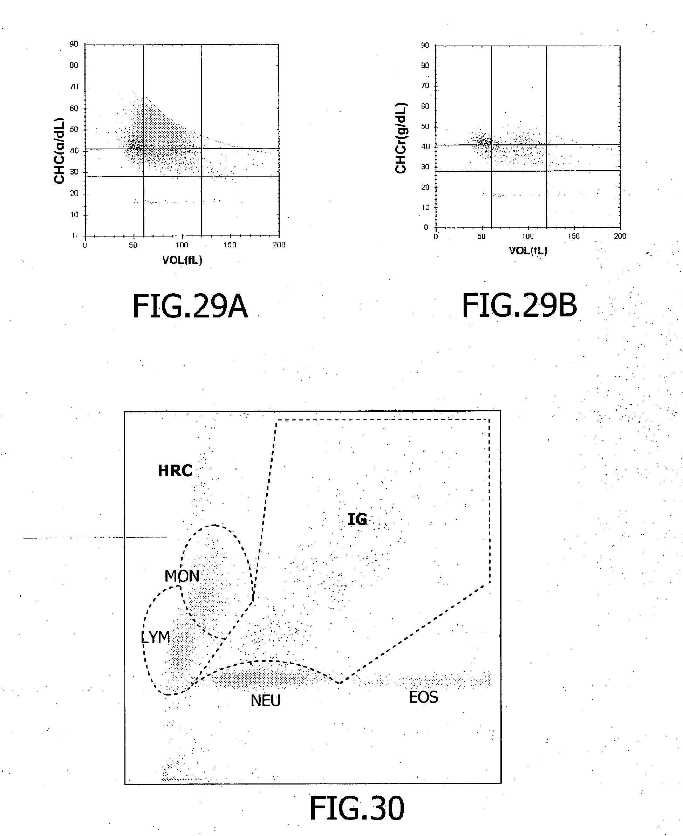

On peut alors obtenir une représentation dans la matrice VOLxCHCr des réticulocytes, et ainsi accéder au paramètre clinique CHr = MRV x E(CHCr), figure 29B. MRV est le volume moyen des réticulocytes et E(CHCr) est l'espérance mathématique de la distribution CHCr. Enfin pour terminer, puisque la mesure d'extinction doit s'effectuer dans le rouge ou le proche infrarouge, il est possible, d'élargir la bande de mesure des lumières de fluorescence. Par un choix adapté de fluorochromes, il est connu de l'homme de l'art qu'il est possible de marquer plusieurs compartiments particuliers tels que la membrane, les mitochondries, le cytoplasme.

La figure 30 (EXTxFLUO) montre qu'on arrive à séparer les populations ayant un niveau de maturité différent grâce à l'utilisation de la fluorescence.

La valeur de fluorescence permet de séparer parmi les granulocytes, préalablement identifiés sur la matrice de la figure 23, les immatures granuleux à l'aide d'un simple seuillage. Si la valeur de la fluorescence dépasse le seuil, alors les particules sont reclassées en immatures granuleux comme indiqué sur la figure 30. Dans le cas de pathologies de la lignée myéloïde (LAM, LMC, SMP, SMD), la présence d'immatures granuleux peut fausser la mesure d'indice des neutrophiles, la mesure de fluorescence permet de mieux identifier la seule population des neutrophiles et donc de garantir que la mesure d'indice de réfraction se fait sur cette seule population.

La valeur de fluorescence permet de séparer les lymphocytes et monocytes, préalablement identifiés sur la matrice de la figure 23, des HRC (High RNA Content, ou cellules immatures) à l'aide d'un simple seuillage. Si la valeur de la fluorescence dépasse le seuil, alors les cellules sont reclassées en HRC (High RNA Content) comme montré sur la figure 30. Dans le cas de pathologies lymphoïdes (LAL, LLC), la mesure de fluorescence permet de mieux identifier la seule population des lymphocytes normaux et donc de garantir que la mesure d'indice de réfraction se fait sur cette seule population.

Un autre type de marquage peut consister en l'utilisation d'anticorps monoclonaux couplés à des composés fluorescents. L'analyse des fluorescences multiples issues des composés fluorescents peut être réalisée par un détecteur multicanaux où chaque canal informe sur l'intensité de fluorescence de chaque composé fluorescent. Il est connu de l'homme de l'art que le traitement de ces fluorescences permet de mieux identifier certaines populations cellulaires. Ces mesures de fluorescence multiples peuvent s'avérer particulièrement avantageuses dans le cas des leucocytes pour lesquels un indice de réfraction effectif peut être mesuré en liaison avec son phénotype, par exemple le cas des plasmocytes détectés par le phénotype CD45, CD38 et CD138 par la méthode du brevet FR 2 895 087.

## Revendications

1. Procédé de mesure en flux d'un indice de réfraction des particules et de classification des particules dans au moins deux populations particulaires présentes dans un fluide utilisant une source lumineuse (S) de faible cohérence temporelle, de longueur de cohérence Lc < 100 μm, utilisée en régime d'extinction à une longueur d'onde centrale (λ) choisie en fonction des caractéristiques des particules à analyser et de l'intervalle des indices de réfraction attendus pour les particules considérées, comprenant les étapes de :

- former, avec la source lumineuse (S), un faisceau d'illumination convergeant d'ouverture angulaire comprise entre 1° et 60°, choisie en fonction des caractéristiques des particules à analyser et de l'intervalle des indices de réfraction attendus pour les particules considérées à la longueur d'onde centrale (λ) choisie et présentant une uniformité d'éclairage meilleure que 10% dans un volume de mesure parallélépipédique axbxc où axb est la section rectangulaire du faisceau, a étant la plus petite dimension d'une fenêtre de mesure qui est dans le sens de parcours de la particule, b étant la plus grande dimension de la fenêtre de mesure qui est perpendiculaire au sens de parcours de la particule, dont le facteur d'aspect a/b est inférieur à 4 et c est la profondeur de champ définie comme l'intervalle géométrique autour du point de mesure pour lequel la puissance ne varie pas plus de 10%, sa valeur étant située autour de 500 μm +/-250 μm ;

- faire circuler le fluide de particules au travers d'un orifice de mesure ;

- mesurer des variations d'impédance RES au passage des particules au niveau de l'orifice de mesure ;

- faire circuler le fluide de particules dans la fenêtre de mesure placée à la sortie de l'orifice de mesure et illuminée par le faisceau;

- mesurer, dans l'axe du faisceau, des extinctions EXT au passage des particules dans la fenêtre de mesure à l'aide d'un dispositif ou d'un détecteur (D2) dont le faisceau de réception convergent d'ouverture angulaire est compris entre 1° et 60° choisi en fonction des caractéristiques des particules à analyser et de l'intervalle des indices de réfraction attendus pour les particules considérées ;

- fusionner les données RES et EXT pour en former des événements ;

- calculer un indice de réfraction relatif IDX pour chacun des événements à partir de RES et EXT ; et

- effectuer la classification de tous les événements grâce à au moins deux paramètres choisis parmi RES, EXT et IDX.

2. Procédé selon la revendication 1, **caractérisé en ce que** le faisceau d'illumination convergeant présente une ouverture angulaire comprise entre 10° à 60°.

3. Procédé selon l'une des revendications 1 et 2, **caractérisé en ce que** l'indice de réfraction relatif IDX est calculé selon une expression du type :

$$IDX = \frac{EXT - B.\ln(RES + T) - D}{A.\ln(RES + T) + C},$$

- A, B, C, D et T ayant été préalablement déterminés pour modéliser la réponse d'extinction optique EXT en fonction du volume mesuré par impédance RES.

4. Procédé selon l'une des revendications précédentes, **caractérisé en ce que** les particules analysées sont des cellules d'un liquide biologique.

5. Procédé selon l'une des revendications précédentes, **caractérisé en ce que** les longueurs d'onde (λ) utilisées pour la mesure de la réfringence particulaire IDX sont situées dans le rouge et proche infrarouge au-delà de 0,6 μm.

6. Procédé selon l'une des revendications précédentes, **caractérisé en ce que** l'étape de classification des événements réalise la séparation des érythrocytes et des plaquettes en utilisant une longueur d'onde (Å) comprise entre 600 nm et 800 nm et une ouverture numérique ON1=ON2 comprise entre 0,2 et 0,6 comprenant une étape de séparation des érythrocytes et plaquettes en fonction de seuils par défaut qui définissent une zone d'appartenance des plaquettes (E14), ayant des valeurs par défaut (E10) et qui peuvent être ajustés de manière automatique (E11, E12, E13).

7. Procédé selon la revendication 6, **caractérisé en ce que** l'étape de classification des événements comprend une sous-étape d'ajustement d'un seuil de séparation résistif entre les particules dont l'extinction n'a pu être mesurée (E11), par détermination d'une vallée dans un histogramme réalisé à partir de toutes les particules rencontrées.

8. Procédé selon l'une des revendications 6 et 7, **caractérisé en ce que** l'étape de classification des événements comprend une sous-étape d'ajustement d'un seuil de séparation résistif (E12) calculé à partir de paramètres statistiques, moyenne et écart type, des particules rencontrées sous un seuil de séparation défini par une droite affine fonction du résistif et de l'extinction.

9. Procédé selon l'une des revendications 6 à 8, caractérisé en ce l'étape de classification des événements comprend une sous-étape d'ajustement d'un seuil (E13) défini par une droite affine fonction du résistif RES et de l'extinction EXT après une rotation de l'ensemble du plan impédance/extinction permettant de placer une ligne de séparation verticale par détermination d'une vallée dans un histogramme réalisé à partir des abscisses des événements situés de part et d'autre de cette ligne de séparation.

10. Procédé selon les revendications 6 à 9, **caractérisé en ce qu'**il comprend une étape de calcul de la concentration en hémoglobine corpusculaire (E21) des particules classifiées dans la population érythrocytaire à l'aide d'une expression affine fonction de leur indice de réfraction IDX.

**11.** Procédé selon la revendication 10, **caractérisé en ce qu'**il comprend une étape de sous-classification de populations érythrocytaires hypochromes, hyperchromes et normochromes et de populations érythrocytaires microcytaires, macrocytaires et normocytaires (E22).

**12.** Procédé selon les revendications 6 à 9, **caractérisé en ce qu'**il comprend une étape de calcul de la densité des particules classifiées dans la population plaquettaire (E23) à l'aide d'une expression affine fonction de l'indice de réfraction IDX.

**13.** Procédé selon la revendication 12, **caractérisé en ce qu'**il comprend une étape de calcul de la masse sèche des plaquettes à partir de la densité de celles-ci et de leur volume connu par la mesure d'impédance.

**14.** Procédé selon l'une ou plusieurs des revendications 6 à 9 et 12 à 13, **caractérisé en ce qu'**il comprend une étape de sous-classification des plaquettes normales, des plaquettes activées, des microplaquettes et des macroplaquettes (E24).

**15.** Procédé selon l'une des revendications 1 à 5, **caractérisé en ce que** l'étape de classification des événements réalise la séparation des populations leucocytaires que sont les lymphocytes, les monocytes, les granulocytes neutrophiles et les granulocytes éosinophiles, comprenant les étapes de :

a) séparer, par un premier seuillage 2D, le bruit de fond correspondant à la présence de débris, d'agrégats plaquettaires, d'érythroblastes d'artefacts etc..
b) séparer, par seuillages 2D successifs, les différentes populations et leurs sous-populations atypiques ou immatures, incluant :

i) une sous-étape d'ajustement d'un seuil automatique entre les lymphocytes et granulocytes neutrophiles ;
ii) une sous-étape d'ajustement d'un seuil automatique entre les granulocytes neutrophiles et éosinophiles ;
iii) une sous-étape d'ajustement d'un seuil automatique entre les monocytes et granulocytes neutrophiles.

**16.** Procédé selon la revendication 15, **caractérisé en ce qu'**il comprend une étape de calcul d'un index d'activation pour les particules classées en lymphocytes à l'aide d'une expression affine fonction de l'indice de réfraction relatif calculé IDX.

**17.** Procédé selon la revendication 15, **caractérisé en ce qu'**il comprend une étape de calcul d'un index d'activation pour les particules classées en lymphocytes par l'analyse de la distribution 2D des volumes et des extinctions optique et la détermination d'une ellipse statistique définie par la position de son centre, son grand axe, son petit axe et son angle entourant la population des lymphocytes.

**18.** Procédé selon la revendication 15, **caractérisé en ce qu'**il comprend une étape de calcul d'un index de lobularité/granularité pour les particules classées en granulocytes neutrophiles à l'aide d'une expression affine fonction de l'indice de réfraction IDX relatif calculé.

**19.** Procédé selon la revendication 15, **caractérisé en ce qu'**il comprend une étape de calcul d'un index de lobularité/granularité pour les particules classées en granulocytes neutrophiles par l'analyse de la distribution 2D en résistif et extinction ou volume et indice de réfraction (RESxEXT ou VOLxIDX) et détermination d'une ellipse statistique définie par la position de son centre, son grand axe, son petit axe et son angle entourant la population des granulocytes neutrophiles.

**20.** Procédé selon l'une des revendications 1 à 5, **caractérisé en ce que** l'étape de classification des événements réalise la séparation des granulocytes basophiles des autres populations leucocytaires comprenant les étapes de :

a) séparer, par seuillage 2D, le bruit de fond correspondant à la présence de débris érythrocytaires, d'agrégats plaquettaires, d'érythroblastes, d'artefacts etc. ;
b) séparer les granulocytes basophiles des autres leucocytes par seuillage 2D, incluant un ajustement d'un seuil automatique entre les granulocytes basophiles et les autres leucocytes.

**21.** Procédé selon la revendication 20, **caractérisé en ce qu'**il comprend une étape de détection d'événements présentant un indice de réfraction relatif IDX hors normalité et correspondant de fait à des interférences dues à la présence de lipides, de cristaux, de bulles etc.

**22.** Procédé selon la revendication 20, **caractérisé en ce qu'**il comprend une étape de détection d'événements ayant un indice de réfraction relatif IDX hors normalité et une distribution volumétrique typique d'une émulsion.

**23.** Procédé selon l'une des revendications précédentes, **caractérisé en ce que** le procédé comprend une étape d'illumination du volume de mesure (a, b, c) avec une lumière de longueur d'onde (À) choisie pour générer un phénomène de fluorescence, une étape de mesure de la fluorescence générée et une étape de classification des événements après ajustement d'un seuil de séparation en fluorescence.

**24.** Procédé selon les revendications 6 et 23, **caractérisé en ce que** l'étape de classification des événements identifiés comme érythrocytes réalise la séparation des érythrocytes et des réticulocytes en fonction d'un seuil placé sur la mesure en fluorescence qui correspond à la limite de maturité des érythrocytes, ayant une valeur par défaut et susceptible d'être ajusté de manière automatique.

**25.** Procédé selon les revendications 6 à 9 et 24, **caractérisé en ce qu'**il comprend une étape de calcul de la concentration en hémoglobine corpusculaire des particules classifiées dans la population réticulocytaire à l'aide d'une expression affine fonction de l'indice de réfraction IDX.

**26.** Procédé selon les revendications 15 et 23, **caractérisé en ce que** l'étape de classification des événements identifiés comme lymphocytes ou monocytes réalise la séparation des lymphocytes ou monocytes et des autres particules à fort contenu en acide nucléique HRC en fonction d'un seuil sur la mesure de fluorescence qui correspond à la limite de maturité des leucocytes mononuclés, ayant une valeur par défaut, et susceptible d'être ajusté de manière automatique.

**27.** Procédé selon les revendications 18 et 23, **caractérisé en ce que** l'étape de classification des événements identifiés comme neutrophiles ou éosinophiles réalise la séparation des granulocytes et des immatures granuleux en fonction d'un seuil sur la mesure de fluorescence qui correspond à la limite de maturité des granulocytes, ayant une valeur par défaut, et susceptible d'être ajusté de manière automatique.

**Patentansprüche**

**1.** Verfahren zur Durchflussmessung eines Brechungsindex von Partikeln und zur Klassifizierung der Partikel in mindestens zwei in einer Flüssigkeit vorhandene Partikelpopulationen unter Verwendung einer Lichtquelle (S) mit kurzer zeitlicher Kohärenz, einer Kohärenzlänge Lc < 100 μm, die unter Extinktionsbedingungen bei einer Mittenwellenlänge (λ) verwendet wird, die in Abhängigkeit von den Eigenschaften der zu analysierenden Partikel und dem für die betreffenden Partikel erwarteten Bereich der Brechungsindizes ausgewählt wird, umfassend die folgenden Schritte:

- Bilden eines konvergierenden Belichtungsstrahlenbündels mit der Lichtquelle (S) mit einem Öffnungswinkel zwischen 1° und 60°, der in Abhängigkeit von den Eigenschaften der zu analysierenden Partikel und dem für die betreffenden Partikel erwarteten Bereich der Brechungsindizes bei der ausgewählten Mittenwellenlänge (λ) ausgewählt wird, und mit einer Gleichmäßigkeit der Ausleuchtung von besser als 10% in einem parallelepipedischen Messvolumen axbxc, wobei axb der rechteckige Querschnitt des Bündels ist, a die kleinste Abmessung eines Messfensters ist, das sich in Richtung des Wegs des Partikels befindet, b die größte Abmessung des Messfensters ist, das senkrecht zur Richtung des Wegs des Partikels liegt, wobei das Seitenverhältnis a/b kleiner als 4 ist und c die Tiefe des Feldes ist, das als die geometrische Spannweite um den Messpunkt definiert ist, für den die Leistung nicht um mehr als 10% variiert, wobei deren Wert etwa 500 μm ± 250 μm beträgt;
- Zirkulierenlassen des Partikelfluids durch eine Messöffnung;
- Messen der Impedanzvariationen RES bei der Passage der Partikel durch die Messöffnung;
- Zirkulierenlassen des Partikelfluids durch das Messfenster, das sich am Ausgang der Messöffnung befindet und durch das Strahlenbündel belichtet wird;
- Messen der Extinktionen EXT in der Achse des Strahlenbündels bei der Passage der Partikel durch das Messfenster mithilfe einer Vorrichtung oder eines Detektors (D2), deren/dessen Öffnungswinkel des konvergenten Empfangsstrahlenbündels zwischen 1° und 60° beträgt, was in Abhängigkeit von den Eigenschaften der zu analysierenden Partikel und dem für die betreffenden Partikel erwarteten Bereich der Brechungsindizes ausgewählt wird;

Zusammenführen der RES- und EXT-Daten, um daraus Ereignisse zu bilden;

- Berechnen eines relativen Brechungsindex IDX für jedes der Ereignisse ausgehend von RES und EXT und
- Durchführen der Klassifizierung aller Ereignisse anhand von zumindest zwei Parametern, die aus RES, EXT und IDX ausgewählt werden.

2. Verfahren nach Anspruch 1, **dadurch gekennzeichnet, dass** das konvergierende Belichtungsstrahlenbündel einen Öffnungswinkel zwischen 10° und 60° aufweist.

3. Verfahren nach einem der Ansprüche 1 und 2, **dadurch gekennzeichnet, dass** der relative Brechungsindex IDX gemäß einem Ausdruck des folgenden Typs berechnet wird:

$$IDX = \frac{EXT - B.\ln(RES + T) - D}{A.\ln(RES + T) + C},$$

- wobei A, B, C, D und T zuvor bestimmt wurden, um die optische Extinktionsreaktion EXT in Abhängigkeit von dem durch Impedanz RES gemessenen Volumen zu modellieren.

4. Verfahren nach einem der vorhergehenden Ansprüche, **dadurch gekennzeichnet, dass** die analysierten Partikel Zellen in einer biologischen Flüssigkeit sind.

5. Verfahren nach einem der vorhergehenden Ansprüche, **dadurch gekennzeichnet, dass** die für die Messung der Partikelbrechung IDX verwendeten Wellenlängen ($\lambda$) im roten und im nahen Infrarot-Bereich jenseits von 0,6 $\mu$m liegen.

6. Verfahren nach einem der vorhergehenden Ansprüche, **dadurch gekennzeichnet, dass** der Schritt der Klassifizierung von Ereignissen die Trennung von Erythrozyten und Blutplättchen unter Verwendung einer Wellenlänge ($\lambda$) zwischen 600 nm und 800 nm und einer numerischen Apertur ON1=ON2 zwischen 0,2 und 0,6 durchführt, umfassend einen Schritt der Trennung von Erythrozyten und Blutplättchen in Abhängigkeit von Standardschwellen, die eine Zone der Zugehörigkeit von Blutplättchen definieren (E14), Standardwerte haben (E10) und die automatisch eingestellt werden können (E11, E12, E13).

7. Verfahren nach Anspruch 6, **dadurch gekennzeichnet, dass** der Schritt der Klassifizierung von Ereignissen einen Unterschritt des Einstellens einer Widerstandstrennschwelle zwischen den Partikeln, deren Extinktion nicht gemessen werden konnte (E11), durch Bestimmung eines Tals in einem Histogramm, das ausgehend von allen angetroffenen Partikeln erstellt wurde, umfasst.

8. Verfahren nach einem der Ansprüche 6 und 7, **dadurch gekennzeichnet, dass** der Schritt der Klassifizierung von Ereignissen einen Unterschritt des Einstellens einer Widerstandstrennschwelle (E12) umfasst, berechnet ausgehend von statistischen Parametern, Mittelwert und Standardabweichung, der Partikel, die unterhalb einer Trennschwelle angetroffen werden, die durch eine Gerade definiert ist, die eine affine Funktion des Widerstands und der Extinktion ist.

9. Verfahren nach einem der Ansprüche 6 bis 8, **dadurch gekennzeichnet, dass** der Schritt der Klassifizierung von Ereignissen einen Unterschritt des Einstellens einer Schwelle (E13), die durch eine Gerade definiert ist, die eine affine Funktion des Widerstands RES und der Extinktion EXT ist, nach einer Rotation der gesamten Ebene Impedanz/Extinktion umfasst, was es gestattet, eine vertikale Trennlinie durch Bestimmung eines Tals in einem Histogramm zu platzieren, das ausgehend von den Abszissen von Ereignissen erstellt wurde, die sich auf beiden Seiten dieser Trennlinie befinden.

10. Verfahren nach den Ansprüchen 6 bis 9, **dadurch gekennzeichnet, dass** es einen Schritt der Berechnung der Konzentration an korpuskulärem Hämoglobin (E21) der klassifizierten Partikel in der Erythrozytenpopulation mit Hilfe eines Ausdrucks, der eine affine Funktion ihres Brechungsindex IDX ist, umfasst.

11. Verfahren nach Anspruch 10, **dadurch gekennzeichnet, dass** es einen Schritt der Unterklassifizierung hypochromer, hyperchromer und normochromer Erythrozytenpopulationen sowie mikrozytischer, makrozytischer und normozytischer Erythrozytenpopulationen (E22) umfasst.

12. Verfahren nach den Ansprüchen 6 bis 9, **dadurch gekennzeichnet, dass** es einen Schritt der Berechnung der Dichte der in der Blutplättchenpopulation klassifizierten Partikel (E23) mithilfe eines Ausdrucks, der eine affine Funktion des Brechungsindex IDX ist, umfasst.

13. Verfahren nach Anspruch 12, **dadurch gekennzeichnet, dass** es einen Schritt der Berechnung der Trockenmasse der Blutplättchen ausgehend von deren Dichte und deren Volumen, das durch die Impedanzmessung bekannt ist, umfasst.

14. Verfahren nach einem oder mehreren der Ansprüche 6 bis 9 und 12 bis 13, **dadurch gekennzeichnet, dass** es einen Schritt der Unterklassifizierung von normalen Blutplättchen, aktivierten Blutplättchen, Mikroplättchen und Makroplättchen (E24) umfasst.

15. Verfahren nach einem der Ansprüche 1 bis 5, **dadurch gekennzeichnet, dass** der Schritt der Klassifizierung von Ereignissen die Trennung von Leukozytenpopulationen, wie Lymphozyten, Monozyten, neutrophile Granulozyten und eosinophile Granulozyten, durchführt, umfassend die folgenden Schritte:

a) Abtrennen des Hintergrundrauschens, das dem Vorhandensein von Zelltrümmern, Blutplättchenaggregaten, Erythroblasten, Artefakten usw. entspricht, durch eine erste 2D-Schwellenbildung;
und
b) Trennen der verschiedenen Populationen sowie deren atypischer oder unreifer Subpopulationen durch aufeinander folgende 2D-Schwellenbildungen, einschließlich:

i) eines Unterschritts des automatischen Einstellens einer Schwelle zwischen Lymphozyten und neutrophilen Granulozyten;
ii) eines Unterschritts des automatischen Einstellens einer Schwelle zwischen neutrophilen und eosinophilen Granulozyten und
iii) eines Unterschritts des automatischen Einstellens einer Schwelle zwischen Monozyten und neutrophilen Granulozyten.

16. Verfahren nach Anspruch 15, **dadurch gekennzeichnet, dass** es einen Schritt der Berechnung eines Aktivierungsindex für die als Lymphozyten klassifizierten Partikel mithilfe eines Ausdrucks, der eine affine Funktion des berechneten relativen Brechungsindex IDX ist, umfasst.

17. Verfahren nach Anspruch 15, **dadurch gekennzeichnet, dass** es einen Schritt der Berechnung eines Aktivierungsindex für die als Lymphozyten klassifizierten Partikel durch Analyse der 2D-Verteilung der Volumina und der optischen Extinktionen und die Bestimmung einer durch die Position ihres Mittelpunkts, ihre große Achse, ihre kleine Achse und ihren Winkel definierten statistischen Ellipse umfasst, die die Population der Lymphozyten einschließt.

18. Verfahren nach Anspruch 15, **dadurch gekennzeichnet, dass** es einen Schritt der Berechnung eines Lobularitäts-/Granularitätsindex für die als neutrophile Granulozyten klassifizierten Partikel mithilfe eines Ausdrucks, der eine affine Funktion des berechneten relativen Brechungsindex IDX ist, umfasst.

19. Verfahren nach Anspruch 15, **dadurch gekennzeichnet, dass** es einen Schritt der Berechnung eines Lobularitäts-/Granularitätsindex für die als neutrophile Granulozyten klassifizierten Partikel durch Analyse der 2D-Verteilung in Widerstand und Extinktion oder Volumen und Brechungsindex (RESxEXT oder VOLxIDX) und der Bestimmung einer durch die Position ihres Mittelpunkts, ihre große Achse, ihre kleine Achse und ihren Winkel definierten statistischen Ellipse umfasst, die die Population der neutrophilen Granulozyten einschließt.

20. Verfahren nach einem der Ansprüche 1 bis 5, **dadurch gekennzeichnet, dass** der Schritt der Klassifizierung von Ereignissen die Trennung der basophilen Granulozyten von den anderen Leukozytenpopulationen durchführt, umfassend die folgenden Schritte:

a) Abtrennen des Hintergrundrauschens, das dem Vorhandensein von Erythrozytentrümmern, Blutplättchenaggregaten, Erythroblasten, Artefakten usw. entspricht, durch 2D-Schwellenbildung; und
b) Trennen der basophilen Granulozyten von den anderen Leukozyten durch 2D-Schwellenbildung, einschließlich eines automatischen Einstellens einer Schwelle zwischen den basophilen Granulozyten und den anderen Lymphozyten.

21. Verfahren nach Anspruch 20, **dadurch gekennzeichnet, dass** es einen Schritt des Nachweises von Ereignissen umfasst, die einen relativen Brechungsindex IDX außerhalb der Normalität aufweisen, der faktisch Interferenzen aufgrund des Vorhandenseins von Lipiden, Kristallen, Blasen usw. entspricht.

22. Verfahren nach Anspruch 20, **dadurch gekennzeichnet, dass** es einen Schritt des Nachweises von Ereignissen mit einem relativen Brechungsindex IDX außerhalb der Normalität und einer für eine Emulsion typischen Volumenverteilung umfasst.

23. Verfahren nach einem der vorhergehenden Ansprüche, **dadurch gekennzeichnet, dass** das Verfahren einen Schritt des Belichtens des Messvolumens (a, b, c) mit Licht einer Wellenlänge ($\lambda$), die so ausgewählt wird, dass ein Fluoreszenzphänomen hervorgerufen wird, einen Schritt der Messung der hervorgerufenen Fluoreszenz und einen Schritt der Klassifizierung von Ereignissen nach Einstellen einer Fluoreszenztrennschwelle umfasst.

24. Verfahren nach den Ansprüchen 6 und 23, **dadurch gekennzeichnet, dass** der Schritt der Klassifizierung von Ereignissen, die als Erythrozyten identifiziert wurden, die Trennung der Erythrozyten und der Retikulozyten in Abhängigkeit von einer auf der Fluoreszenzmessung platzierten Schwelle durchführt, die der Reifheitsgrenze der Erythrozyten entspricht, einen Standardwert hat und automatisch eingestellt werden kann.

25. Verfahren nach einem der Ansprüche 6 bis 9 und 24, **dadurch gekennzeichnet, dass** es einen Schritt der Berechnung der Konzentration an korpuskulärem Hämoglobin der in der Retikulozytenpopulation klassifizierten Partikel mithilfe eines Ausdrucks, der eine affine Funktion des Brechungsindex IDX ist, umfasst.

26. Verfahren nach den Ansprüchen 15 und 23, **dadurch gekennzeichnet, dass** der Schritt der Klassifizierung von Ereignissen, die als Lymphozyten oder Monozyten identifiziert wurden, eine Trennung der Lymphozyten oder Monozyten und der anderen Partikel mit hohem Gehalt an Nukleinsäure HRC in Abhängigkeit von einer Schwelle auf der Fluoreszenzmessung durchführt, die der Reifheitsgrenze der mononukleären Leukozyten entspricht, die einen Standardwert hat und automatisch eingestellt werden kann.

27. Verfahren nach den Ansprüchen 18 und 23, **dadurch gekennzeichnet, dass** der Schritt der Klassifizierung von Ereignissen, die als Neutrophile oder Eosinophile identifiziert wurden, eine Trennung der Granulozyten und der unreifen Granula in Abhängigkeit von einer Schwelle auf der Fluoreszenzmessung durchführt, die der Reifheitsgrenze der Granulozyten entspricht, die einen Standardwert hat und automatisch eingestellt werden kann.

**Claims**

1. A method of flow measuring of a refractive index of particles and of classifying particles in at least two populations of particles present in a fluid by using a light source (S) of short coherence time, of coherence length Lc < 100 $\mu$m, used under extinction conditions at a center wavelength ($\lambda$) selected as a function of the characteristics of the particles to be analyzed and the range of refractive indices expected for the particles under consideration, the method comprising the steps of:

using the light source (S) to form a converging illuminating beam with an aperture angle comprised between 1° and 60°, selected as a function of the characteristics of the particles to be analyzed and the range of refractive indices expected for the particles under consideration at the selected center wavelength ($\lambda$) and presenting lighting uniformity better than 10% in a parallelepipedal measuring volume a×b×c, where a×b is the rectangular section of the beam, a being the smallest dimension of a measurement window which is in the direction of travel of the particle, b being the largest dimension of the measurement window which is perpendicular to the direction of travel of the particle, having an aspect ratio a/b of less than 4, and where c is the depth of field defined as being the geometric range about the measurement point for which the power varies by no more than 10%, its value being situated at about 500 $\mu$m $\pm$ 250 $\mu$m;
causing the fluid with particles to flow through a measurement orifice;
measuring variations in impedance RES as the particles go through the measurement orifice;
causing the fluid with particles to flow in the measurement window placed at the outlet from the measurement orifice and illuminated by the beam;
measuring extinctions EXT on the axis of the beam as the particles pass through the measurement window, the measurement being performed by means of a device or a detector (D2) having a converging reception beam of aperture angle comprising between 1° and 60° selected as a function of the characteristics of the particles to be analyzed and the range of refractive indices expected for the particles under consideration;

merging the RES and EXT data to form events therefrom;
calculating a relative refractive index IDX for each event from RES and EXT; and
performing the classification of all of the events using at least two parameters selected from RES, EXT and IDX.

2. A method according to claim 1, **characterized in that** the converging illuminating beam presents an aperture angle comprised between 10° and 60°.

3. A method according to either of claims 1 and 2, **characterized in that** the relative refractive index IDX is calculated using an expression of the type:

$$IDX = \frac{EXT - B.\ln(RES + T) - D}{A.\ln(RES + T) + C}$$

with A, B, C, D, and T having been previously determined in order to model the optical extinction response EXT as a function of the volume measured by impedance RES.

4. A method according to one of the preceding claims, **characterized in that** the analyzed particles are cells in a biological liquid.

5. A method according to one of the preceding claims, **characterized in that** the wavelengths ($\lambda$) used for measuring particle refringence IDX lie in the red and the near infrared beyond 0.6 $\mu$m.

6. A method according to one of the preceding claims, **characterized in that** the step of classifying events separates erythrocytes and platelets by using a wavelength ($\lambda$) lying in the range 600 nm to 800 nm and a numerical aperture NA1=NA2 comprised between 0.2 and 0.6, comprising a step of separating erythrocytes and platelets as a function of default thresholds that define a belonging zone for platelets (E14), the thresholds having default values (E10) and being capable of being automatically adjusted (E11, E12, E13) .

7. A method according to claim 6, **characterized in that** the step of classifying events comprises a sub-step of adjusting a resistive separation threshold between the particles for which extinction could not be measured (E11), by determining a valley in a histogram prepared from all of the encountered particles.

8. A method according to one of claims 6 and 7, **characterized in that** the step of classifying events comprises a sub-step of adjusting a resistive separation threshold (E12) calculated from statistical parameters, the mean and the standard deviation, of the encountered particles beneath a separation threshold defined by an affine straight line that is a function of the impedance and extinction measurements.

9. A method according to one of claims 6 to 8, **characterized in that** the step of classifying events comprises a sub-step of adjusting a threshold (E13) defined by an affine straight line that is a function of the impedance RES and extinction EXT measurements after rotating the entire impedance/extinction plane, allowing a separation line to be vertically placed by determining a valley in a histogram made from the abscissa axis points of events situated on either side of the separation line.

10. A method according to claims 6 to 9, **characterized in that** it comprises a step of calculating the corpuscular hemoglobin concentrations (E21) of particles classified as being in the erythrocyte population using an affine expression that is a function of their refractive indices IDX.

11. A method according to claim 10, **characterized in that** it comprises a sub-classification step of classifying hypochromic, hyperchromic, and normochromic erythrocyte populations and microcyte, macrocyte, and normocyte erythrocyte populations.

12. A method according to claims 6 to 9, **characterized in that** it comprises a step of calculating the densities of the particles classified in the platelet population (E23) using an affine expression that is a function of their refractive indices IDX.

13. A method according to claim 12, **characterized in that** it comprises a step of calculating the dry weights of platelets from their densities and from their volumes as known by the impedance measurements.

14. A method according to one or more of claims 6 to 9 and 12 to 13, **characterized in that** it includes a step of sub-classification of normal platelets, activated platelets, microplatelets, and macroplatelets (E24).

15. A method according to one of claims 1 to 5, **characterized in that** the step of classifying events separates populations of leukocytes as constituted by lymphocytes, monocytes, neutrophilic granulocytes and eosinophilic granulocytes, and comprises the steps of:

  a) separating, by means of a first 2D thresholding, background noise corresponding to the presence of debris, platelet aggregates, erythroblasts, artifacts, etc.;
  b) separating, by successive 2D thresholding, the various populations and their atypical or immature subpopulations, comprising:

    i) a sub-step of automatically adjusting a threshold between lymphocytes and neutrophilic granulocytes;
    ii) a sub-step of automatically adjusting a threshold between neutrophilic and eosinophilic granulocytes; and
    iii) a sub-step of automatically adjusting a threshold between monocytes and neutrophilic granulocytes.

16. A method according to claim 15, **characterized in that** it includes a step of calculating an activation index for particles classified as lymphocytes with the help of an affine expression that is a function of the calculated relative refractive index IDX.

17. A method according to claim 15, **characterized in that** it includes a step of calculating an activation index for particles classified as lymphocytes by analyzing the 2D distribution of volumes and of optical extinctions, and by determining a statistical ellipse surrounding the population of lymphocytes, the ellipse being defined by the position of its center, by its major axis, by its minor axis, and by its angle.

18. A method according to claim 15, **characterized in that** it includes a step of calculating a lobularity/granularity index for the particles classified as neutrophilic granulocytes with the help of an affine expression that is a function of the calculated relative refractive index IDX.

19. A method according to claim 15, **characterized in that** it includes a step of calculating a lobularity/granularity index for the particles classified as neutrophilic granulocytes by analyzing the 2D distribution in impedance and extinction measurements or in volume and refractive index measurements (REX×EXT or VOL×IDX), and determining a statistical ellipse surrounding the population of neutrophilic granulocytes, the ellipse being defined by the position of its center, by its major axis, by its minor axis, and by its angle.

20. A method according to one of claims 1 to 5, **characterized in that** the step of classifying events separates basophilic granulocytes from other leukocyte populations and comprises the steps of:

  a) separating, by 2D thresholding, the background noise corresponding to the presence of erythrocyte debris, platelet aggregates, erythroblasts, artifacts, etc.;
  b) separating basophilic granulocytes from other leukocytes by 2D thresholding, including an automatic adjustment of a threshold between the basophilic granulocytes and the other leukocytes.

21. A method according to claim 20, **characterized in that** it includes a step of detecting events presenting an abnormal relative refractive index IDX and corresponding in fact to interference due to the presence of lipids, crystals, bubbles, etc.

22. A method according to claim 20, **characterized in that** it includes a step of detecting events having an abnormal relative refractive index IDX and a volume distribution that is typical of an emulsion.

23. A method according to one of the preceding claims, **characterized in that** the method includes a step of illuminating the measurement volume (a, b, c) with light at a wavelength (λ) that is selected to generate a fluorescence phenomenon, a step of measuring the fluorescence that is generated, and a step of classifying events after adjusting a fluorescence separation threshold.

24. A method according to claims 6 and 23, **characterized in that** the step of classifying events identified as erythrocytes separates erythrocytes from reticulocytes as a function of a threshold based on measuring fluorescence and corresponding to the erythrocyte maturity limit, the threshold having a value by default and being suitable for being adjusted in automatic manner.

25. A method according to claims 6 to 9 and 24, **characterized in that** it includes a step of calculating the corpuscular hemoglobin concentrations of particles classified in the reticulocyte population by using an affine expression that is a function of the refractive index IDX.

26. A method according to claims 15 and 23, **characterized in that** the step of classifying events identified as lymphocytes or monocytes separates the lymphocytes or monocytes from the other particles having a high content of nucleic acid HRC as a function of a fluorescence measurement threshold that corresponds to the maturity limit of mononuclear leukocytes, the threshold having a value by default and being suitable for being adjusted in automatic manner.

27. A method according to claims 18 and 23, **characterized in that** the step of classifying events identified as neutrophilic or eosinophilic separates granulocytes and immature granulocytes as a function of a fluorescence measurement threshold that corresponds to the granulocyte maturity limit, the threshold having a value by default and being suitable for being adjusted in automatic manner.

FIG.1A

FIG.1B

FIG.2

FIG.3A

FIG.3B

FIG.4

FIG.5

FIG.6

FIG.7

FIG.8

**FIG.9A**

**FIG.9B**

**FIG.9C**

**FIG.9D**

FIG.9E

FIG.9F

FIG.10

FIG.11

FIG.12

Initialisation — E0

E10 — Classification RBC /PLT selon la matrice RESxEXT

E11 — Ajustement de la séparation résistive pour les éléments d'extinction nulle

E12 — Ajustement de la séparation résistive

E13 — Ajustement de la séparation en extinction

E14 — Classification RBC /PLT selon la matrice RESxEXT

E1 — Classification RBC /PLT

E20 — Calcul de l'index de réfraction

E21 — Calcul de l'HGBc

E23 — Calcul de la densité de thrombocytes

E22 — Sous-classification des RBC selon leur HGBc et leur VOL

E24 — Sous-classification des PLT selon leur densité et leur VOL

E2 — Sous-classification des RBC et des PLT

FIG.13

FIG.14

FIG.15

FIG.16A

FIG.16B

FIG.17A

FIG.17B

FIG.17C

FIG.18

FIG.19

FIG.20

FIG.21A

FIG.21B

FIG.22A

FIG.22B

FIG.23

FIG.24

FIG.25A

FIG.25B

49

FIG.25C

FIG.26A

FIG.26B

FIG.26C

FIG.27

FIG.28

FIG.29A

FIG.29B

FIG.30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5247340 A
- US 20050151967 A
- WO 2006053960 A
- US 4735504 A
- US 5194909 A
- US 6074879 A
- US 20050074894 A
- US 5817519 A
- US 6025201 A
- US 20050134833 A, D.L. Kramer
- WO 9726528 A

- FR 2759166
- US 5530695 A
- US 5360739 A
- US 6630990 B
- EP 1967840 A2
- US 20050176152 A
- US 5506673 A
- FR 2791138
- FR 2821428
- FR 0854229
- FR 2895087

**Littérature non-brevet citée dans la description**

- **ONOFRIO et al.** Simultaneous measurement of reticulocytes and red blood cell indices in healthy subjects and patients with microcytic and macrocytic anemia. *Blood,* 1995, vol. 85, 818-823
- **BRUGNARA et al.** Reticulocyte hemoglobin content (CHr) : early indicator of iron deficiency and response to therapy. *Blood,* 1994, vol. 83, 3100-3101
- **K. W. KEOHANE ; W. K. METCALF.** The cytoplasmic refractive index of lymphocytes, its significance and its changes during active immunization. *Experimental Physiology,* 01 Janvier 1959, vol. 44, 343-350
- **SEM'YANOV et al.** Calibration-free method to détermine the size and hemoglobin concentration of individual red blood cells from light scattering. *Applied Optics,* Novembre 2000, vol. 39 (31
- **RILEY et al.** Reticulocyte Enumeration : Past & Present. *Laboratory Medecine,* Octobre 2001, vol. 32 (10
- **LACOMBE et al.** Automated reticulocyte counting and immature reticulocyte fraction measurement. *American Journal of Clinical Pathology,* Novembre 1999, vol. 112 (5
- **BRIGGS et al.** New Red Cell Parameters on the Sysmex XE-2100 as potential markers of functional Iron Deficiency. *Sysmex Journal International,* 2001, vol. 11 (2

- **FRANCK et al.** Potential Utility of Ret-Y in the Diagnosis of Iron-Restricted Erythropoiesis. *Clinical Chemistry,* 2004, vol. 50, 1240-1242
- **Y. R. KIM ; L. ORNSTEIN.** Isovolumetric Sphering of Erythrocytes for More Accurate and Precise Cell Volume Measurement by Flow Cytometry. *Cytometry,* 1983, vol. 3 (6), 419-427
- **METCALF et al.** The Cytoplasmic Refractive Index of Lymphocytes, its Significance and its Changes during Active Immunization. *Experimental Physiology,* 1959, vol. 44, 343-350
- **METCALF et al.** Changes in Blood Lymphocyte Cytoplasmic Refractive Index Following Skin Grafting in Rabbits. *Blood,* 1972, vol. 39, 113-116
- **L. MANDEL ; E. WOLF.** Optical Coherence and Quantum Optics. Cambridge University Press, 1995, 188
- **JOSEPH W. GOODMAN.** Introduction to Fourier Optics. Roberts & Compagny, 2005, 127
- **S. SLANSKY.** Influence de la cohérence de l'éclairage sur le contraste de l'image d'un point noir en présence d'un petit défaut de mise au point. *Journal of Modern Optics,* Octobre 1955, vol. 2 (3
- **A. DOICU ; T. WRIEDT.** Equivalent refractive index of a sphere with multiple spherical inclusions. *J. Opt. A : Pure Appl. Opt.,* 2001, vol. 3, 204-209
- **R. BARER ; S. JOSEPH.** Refractometry of living cells. *Quarterly Journal of Microscopical Science,* Décembre 1954, vol. 95, 399-423